(19)

Europäisches
Patentamt

European
Patent Office

Office européen
des brevets

(11)  **EP 4 492 481 A1**

(12)  **EUROPEAN PATENT APPLICATION**
published in accordance with Art. 153(4) EPC

(43) Date of publication:
**15.01.2025  Bulletin 2025/03**

(21) Application number: **23792223.2**

(22) Date of filing: **20.04.2023**

(51) International Patent Classification (IPC):
*H01M 4/04* (2006.01)      *H01M 4/13* (2010.01)
*C08L 27/18* (2006.01)     *C08L 23/00* (2006.01)
*G01Q 30/04* (2010.01)     *G01Q 30/20* (2010.01)
*G01Q 60/36* (2010.01)

(52) Cooperative Patent Classification (CPC):
**C08L 23/00; C08L 27/18; G01Q 30/04;
G01Q 30/20; G01Q 60/36; H01M 4/04; H01M 4/13;**
Y02E 60/10

(86) International application number:
**PCT/KR2023/005416**

(87) International publication number:
**WO 2023/204649 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.04.2022  KR 20220049196**

(71) Applicant: **LG Energy Solution, Ltd.
Seoul 07335 (KR)**

(72) Inventors:
• **LEE, Ki-Seok
Daejeon 34122 (KR)**

• **YANG, Hyun-Jin
Daejeon 34122 (KR)**
• **PARK, Moon-Soo
Daejeon 34122 (KR)**
• **SHIN, Dong-Oh
Daejeon 34122 (KR)**
• **LEE, Nam-Jeong
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54)  **DRY ELECTRODE COMPRISING MIXTURE POWDER FOR ELECTRODE**

(57)    The dry electrode obtained by the method according to the present disclosure shows high dispersibility of the conductive material in the electrode active material layer. Therefore, as the dispersibility is increased, the internal resistance of the electrode active material layer and the interfacial resistance with a current collector are reduced, under the same content of the conductive material in the electrode. In addition, when applying a dry electrode showing high dispersibility to a battery, ohmic resistance is reduced during the operation of the battery to improve a drop in voltage and to enhance high-output efficiency. When the conductive material shows excessively poor dispersibility, a deviation may occur in the deterioration of the electrode active material depending on the position in the electrode, thereby adversely affecting the life characteristics of the battery. Further, the evaluation tool according to the present disclosure can determine the dispersibility of a conductive material in an electrode as a quantitative value.

EP 4 492 481 A1

**(Cont. next page)**

EP 4 492 481 A1

FIG. 1

2

**Description**

<u>TECHNICAL FIELD</u>

The present application claims priority to Korean Patent Application No. 10-2022-0049196 filed on April 20, 2022 in the Republic of Korea. The present disclosure relates to a dry electrode including a mixed powder for forming a dry electrode and having a high conductive material dispersibility.

<u>BACKGROUND ART</u>

As energy storage technology has been given an increasing attention, the spectrum of application thereof has been expanded to cellular phones, tablet and laptop computers and camcorders, and even to energy for electric vehicles (EVs) and hybrid electric vehicles (HEVs), and research and development of electrochemical devices have been increased gradually. In this context, electrochemical devices have been most spotlighted, and particularly, development of rechargeable lithium-ion secondary batteries has been focused. Recently, research and development of designing novel electrodes and batteries have been conducted in order to improve the capacity density and specific energy in developing such batteries.

Recently, there has been suggested a method for manufacturing a dry type electrode using no solvent in order to reduce the degradation of electrode materials caused by the solvent used in manufacturing an electrode or side reactions caused by the organic solvent remaining after manufacturing an electrode.

A dry electrode may be obtained by mixing electrode materials, such as an electrode active material, a conductive material and a binder resin, in the state of powder without using any solvent to prepare a mixed powder, calendering the mixed powder to obtain a free-standing type dry electrode film, and laminating the dry electrode film with a current collector. For example, referring to the related art, such as US Patent Application Publication No. US2005-0266298A1, there has been suggested a method including fibrilizing a binder through a high-shear mixing process, such as jet-milling, when preparing an electrode mixture, and carrying out compression molding of the mixture into a film shape.

When manufacturing an electrode, a method for increasing the content of an active material in the electrode has been considered in order to improve the energy density. In this case, the content of a conductive material is reduced relatively, resulting in an increase in the resistance and degradation of the output characteristics of a battery. In the electrode obtained through a conventional wet process, a method for increasing the dispersibility of a conductive material has been applied, and for example, a linear conductive material is used, or a dispersant is added in preparing slurry has been applied, even when the conductive material is used at a relatively small amount, to maximize the content of an electrode active material.

However, when manufacturing an electrode through a dry process with no use of a solvent, it is difficult to improve the dispersibility through the introduction of a dispersant. In addition, since strong shear force is applied in preparing a mixed powder for an electrode, the conductive material is broken by the shear force despite the introduction of a linear conductive material and cannot retain its original length well, and thus there is a problem in that a conduction path cannot be formed sufficiently. Under this circumstance, there is a need for the research and development of a method for manufacturing a dry electrode which can increase the dispersibility of a conductive material in manufacturing a dry electrode. Also, there is a need for an evaluation tool capable of determining the dispersibility of a conductive material in a dry electrode.

<u>DISCLOSURE</u>

<u>Technical Problem</u>

The present disclosure is designed to solve the problems of the related art, and therefore the present disclosure is directed to providing a dry electrode showing a high conductive material dispersibility. The present disclosure is also directed to providing a method for determining the dispersibility of a conductive material in a dry electrode. It will be easily understood that these and other objects and advantages of the present disclosure may be realized by the means shown in the appended claims and combinations thereof.

<u>Technical Solution</u>

According to the first embodiment of the present disclosure, there is provided a dry electrode for an electrochemical device, which includes an electrode active material layer derived from a dry electrode film, wherein the dry electrode active material layer includes a mixed powder for an electrode and has a sheet-like shape having a predetermined thickness through the thermocompression binding of the mixed powder for an electrode, the mixed powder for an electrode includes an electrode active material and a binder polymer, and at least one optional cross-section inside of the electrode active material layer shows a conductive material dispersibility index 1 (Index 1) of 3.5 $\mu$m$^{-1}$ or more as determined according to the following Formula 1 and/or a conductive material dispersibility index 2 (Index 2) of 10 or more as determined according to the following Formula 2:

$$[\text{Formula 1}]$$

$$\text{Index 1 } (\mu\text{m}^{-1}) = \text{Boundary}_{\text{measured}}/\text{A}$$

$$[\text{Formula 2}]$$

$$\text{Index 2} = \text{Boundary}_{\text{measured}}/\text{L}_{\text{circle}}$$

wherein Boundary$_{\text{measured}}$ in Formula 1 represents the circumference of a portion determined in a predetermined cross-section of the electrode active material layer and defined as a conductive material zone, A in Formula 1 represents the area of a portion determined in a predetermined cross-section of the electrode active material layer and defined as a conductive material zone, and L$_{\text{circle}}$ in Formula 2 represents the circumference of a circle having the same area as the above-defined conductive material zone.

According to the second embodiment of the present disclosure, there is provided the dry electrode for an electrochemical device as defined in the first embodiment, wherein at least one optional cross-section inside of the electrode active material layer shows a conductive material dispersibility index 1 (Index 1) of 3.5 $\mu$m$^{-1}$ or more as determined according to Formula 1 and a conductive material dispersibility index 2 (Index 2) of 10 or more as determined according to Formula 2.

According to the third embodiment of the present disclosure, there is provided the dry electrode for an electrochemical device as defined in the first or the second embodiment, wherein Index 1 and Index 2 are calculated by the method for evaluating the dispersibility of a conductive material including the steps of:

(Step 1) preparing a sample of cross-section in which an optional cross-section inside of the electrode active material layer is exposed;
(Step 2) acquiring a 2D-scale map about the resistance distribution of the sample of cross-section;
(Step 3) masking a conductive material zone; and
(Step 4) calculating the circumference and area of the masked zone, inputting the calculated values to Formula 1 and/or Formula 2, and determining the dispersibility of the conductive material of the electrode active material layer.

According to the fourth embodiment of the present disclosure, there is provided the dry electrode for an electrochemical device as defined in any one of the first to the third embodiments, wherein the electrode active material layer is formed on at least one surface of an electrode current collector, and the cross-section(s) is a surface parallel with or perpendicular to the portion where the electrode active material layer faces the current collector.

According to the fifth embodiment of the present disclosure, there is provided the dry electrode for an electrochemical device as defined in any one of the first to the fourth embodiments, wherein the binder polymer is fibrilized, and the fibrilization is a result performed by a kneading process based on shear stress.

According to the sixth embodiment of the present disclosure, there is provided the dry electrode for an electrochemical device as defined in any one of the first to the fifth embodiments, wherein the binder polymer includes polytetrafluoroethylene (PTFE), polyolefin or a mixture thereof.

According to the seventh embodiment of the present disclosure, there is provided a method for manufacturing the dry electrode as defined in any one of the first to the fifth embodiments, including the steps of:

(S10) mixing electrode materials including an electrode active material and a binder polymer;
(S20) kneading the mixed electrode materials;
(S30) grinding the resultant product of step (S20) to obtain a mixed powder for an electrode; and
(S40) carrying out compression molding of the mixed powder for an electrode to obtain a free standing-type dry electrode film,

wherein step (S20) is carried out at a temperature of 60°C or higher.

According to the eighth embodiment of the present disclosure, there is provided the method as defined in the seventh embodiment, wherein step (S20) is carried out at a temperature ranging from 60°C to 250°C.

According to the ninth embodiment of the present disclosure, there is provided the method as defined in the seventh or the eighth embodiment, which further includes a step of binding the dry electrode film with a current collector through a lamination process.

According to the tenth embodiment of the present disclosure, there is provided an electrochemical device including: a positive electrode; a negative electrode; and a separator or a solid electrolyte membrane interposed between the positive electrode and the negative electrode, wherein at least one of the positive electrode and the negative electrode is the dry electrode as defined in any one of the first to the sixth embodiments.

Advantageous Effects

The dry electrode obtained by the method according to the present disclosure shows high dispersibility of the conductive material in the electrode active material layer. Therefore, as the dispersibility is increased, the internal resistance of the electrode active material layer and the interfacial resistance with a current collector are reduced, under the same content of the conductive material in the electrode. In addition, when applying a dry electrode showing high dispersibility to a battery, ohmic resistance is reduced during the operation of the battery to improve a drop in voltage and to enhance high-output efficiency. When the conductive material shows excessively poor dispersibility, a deviation may occur in the deterioration of the electrode active material depending on the position in the electrode, thereby adversely affecting the life characteristics of the battery. Further, the evaluation tool according to the present disclosure can determine the dispersibility of a conductive material in an electrode as a quantitative value.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 is a scanning spreading resistance microscopic (SSRM) image of Example 1, and FIG. 2 is an image determined by masking the conductive material zone thereof.

FIG. 3 is an SSRM image of Comparative Example 1, and FIG. 4 is an image determined by masking the conductive material zone thereof.

FIG. 5 illustrates a histogram of Example 1, and FIG. 6 illustrates a histogram of Comparative Example 1.

FIG. 7 is a schematic view illustrating the electrode according to an embodiment of the present disclosure.

FIG. 8 is a schematic view illustrating calculation of the QBR value of an electrode active material layer.

FIG. 9 is a schematic view illustrating the process for manufacturing a unit film for an electrode according to an embodiment of the present disclosure.

FIG. 10 is a schematic view illustrating the electrode lamination process according to an embodiment of the present disclosure.

FIG. 11a and FIG. 11b are schematic views illustrating a method for preparing a sample of electrode cross-section.

FIG. 12a illustrates a histogram of Example 7, and FIG. 12b illustrates how an active material zone is overlapped with a conductive material zone.

FIG. 13 is an SSRM image of Example 5 and an image determined by masking the conductive material zone thereof.

FIG. 14 is an SSRM image of Example 6 and an image determined by masking the conductive material zone thereof.

FIG. 15 is an SSRM image of Example 7, and FIG. 16 is an image determined by masking the conductive material zone thereof.

FIG. 17 is an image resulting from the masking of the conductive material zone with no correction in the histogram obtained from the electrode according to Example 7, and FIG. 18 is an image resulting from the masking of the conductive material zone after correction in the electrode according to Example 7.

FIG. 19 illustrates a display screen showing the area and circumference of a conductive material zone calculated by using Gwyddion software.

BEST MODE

Hereinafter, preferred embodiments of the present disclosure will be described in detail with reference to the accompanying drawings.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms 'a', 'an' and 'the' are intended to include the plural forms as well, unless the context clearly indicates otherwise.

Throughout the specification, the expression 'a part includes or comprises an element' does not preclude the presence of any additional elements but means that the part may further include the other elements, unless otherwise stated.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

The present disclosure relates to a dry electrode obtained by pressurizing a mixed powder for a dry electrode. The present disclosure also relates to a method for manufacturing the dry electrode. Herein, the dry electrode may be used as an electrode for an electrochemical device, such as a lithium-ion secondary battery.

### Dry Electrode

Hereinafter, a dry electrode will be explained in more detail.

According to the present disclosure, the dry electrode includes an electrode active material layer derived from a free standing type dry electrode film. For example, the dry electrode includes a current collector, and an electrode active material layer derived from a dry electrode film and disposed on at least one surface of the current collector, wherein the dry electrode film may be bound with the current collector through a lamination process, or the like.

### Dry Electrode Film

The dry electrode film refers to a free standing-type sheet obtained by using electrode materials, including an electrode conductive material and a binder, without introducing any solvent. As used herein, the term 'free standing-type' refers to an object which can maintain its own shape without relying on other members and can be transferred or handled by itself. According to the present disclosure, the dry electrode film may be formed by compressing a mixed powder for an electrode, as described hereinafter. For example, the electrode active material layer may have a shape of layered structure formed by integration of the mixed powder for an electrode through compression. The mixed powder for an electrode is a powdery electrode material containing an electrode active material and a binder polymer. For example, as described hereinafter, the mixed powder for an electrode may be obtained by pulverizing mixture lumps containing the electrode active material and the binder polymer.

### Contents of Ingredients

Meanwhile, according to an embodiment of the present disclosure, the electrode active material layer includes an electrode active material in an amount of 80 wt% or more, or 90 wt% or more, based on the total weight of the electrode active material layer. In addition, according to an embodiment of the present disclosure, the electrode active material layer may further include a conductive material, if necessary. The conductive material may be present in an amount of 20 wt% or less, 10 wt% or less, or 5 wt% or less, based on 100 wt% of the electrode active material layer, and particularly, in an amount of 0.1 wt% or more, considering conductivity. For example, the conductive material may be present in an amount of about 0.1-5 wt% in the electrode active material layer.

According to an embodiment of the present disclosure, the content of the electrode active material in the electrode active material layer may be 95-98 wt%. Within the above-defined range, the content of the binder polymer may be 0.5-10 wt%, and the content of the conductive material may be 0.5-5 wt%.

Meanwhile, according to an embodiment of the present disclosure, the electrode active material layer is derived from a dry electrode film, and the content ratio of the ingredients in the dry electrode film may be the same as the content ratio thereof in the electrode active material layer.

### Electrode Active Material

Meanwhile, the electrode active material layer may include a positive electrode active material or a negative electrode active material, depending on the polarity of the electrode. Non-limiting examples of the positive electrode active material are not particularly limited, as long as they are lithium transition metal oxides or lithium metal iron phosphates, metal oxides, or the like, and particular examples thereof include, but are not limited to: layered compounds, such as lithium

cobalt oxide ($LiCoO_2$) and lithium nickel oxide($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide ($Li_2CuO_2$); vanadium oxides, such as $LiVsOs$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; lithium metal phosphates $LiMPO_4$ (wherein M is Fe, CO, Ni or Mn); disulfide compounds; $Fe_2(MoO_4)_3$; or the like.

Non-limiting examples of the negative electrode active material include: carbon, such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon-based oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene; Li-Co-Ni-based materials, or the like.

## Binder Polymer

According to the present disclosure, the binder polymer is not particularly limited, as long as it can be fibrilized in the following step, particularly, the step for preparing mixture lumps. Herein, 'fibrilization' refers to fine division of a polymer, and may be carried out by using mechanical shear force, or the like. The polymer fibers fibrilized in this manner generates a lot of microfibers (fibrils) through the disentanglement of the surface. According to an embodiment of the present disclosure, non-limiting examples of the binder polymer may include polytetrafluoroethylene (PTFE), polyolefin or a mixture thereof. Particularly, the binder polymer may include polytetrafluoroethylene (PTFE). More particularly, the binder polymer may be polytetrafluoroethylene (PTFE). Particularly, the polytetrafluoroethylene (PTFE) may be present in an amount of 60 wt% or more, based on the total weight of the binder polymer. Meanwhile, herein, the binder ingredient may further include at least one of polyethylene oxide (PEO), polyvinylidene fluoride (PVDF), polyvinylidene fluoride-co-hexafluoropropylene (PVDF-HFP) and polyolefin-based polymers.

## Conductive Material

According to the present disclosure, the electrode active material layer of the dry electrode may further include a conductive material. According to an embodiment of the present disclosure, the conductive material may be contained in the mixed powder for an electrode and introduced to the electrode active material layer. According to an embodiment of the present disclosure, the conductive material is not particularly limited, as long as it has conductivity, while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material, such as a polyphenylene derivative; or the like. Particularly, with a view to homogeneous mixing of the conductive material and improvement of the conductivity, the conductive material may include at least one selected from the group consisting of activated carbon, graphite, carbon black and carbon nanotubes. Meanwhile, according to an embodiment of the present disclosure, with a view to improvement of dispersibility in the step of preparing a mixed powder for an electrode in manufacturing a dry electrode, it is preferred to increase the use of a carbon black-type dot-like conductive material.

## Filler

Meanwhile, a filler as an ingredient for inhibiting swelling of the electrode active material layer may be further introduced optionally to the mixture. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

## Current Collector

Meanwhile, according to an embodiment of the present disclosure, the current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, etc., aluminum-cadmium alloy, or the like. In addition, fine surface irregularities may be formed on the surface of the current collector to enhance the binding force of the electrode active material. Further, the current collector may have various shapes, such as a film, a sheet, a foil, a net, a porous body, a foam or non-woven web body, or the like.

Meanwhile, according to an embodiment of the present disclosure, the current collector may be totally or partially coated with a conductive primer in order to reduce the surface resistance and to improve the adhesion. Herein, the conductive primer may include a conductive material and a binder, wherein the conductive material is not particularly limited, as long as it has conductivity. For example, the conductive material may be a carbonaceous material. The binder may include a fluorine-based binder (including PVDF and PVDF copolymer), an acryl-based binder and an aqueous binder that can be dissolved in a solvent, or the like.

## Conductive Material Dispersibility

According to the present disclosure, at least one optional cross-section inside of the electrode active material layer shows a conductive material dispersibility index 1 (Index 1) of 3.5 $\mu$m$^{-1}$ or more as determined according to the following Formula 1 and/or a conductive material dispersibility index 2 (Index 2) of 10 or more as determined according to the following Formula 2. Preferably, in the electrode active material layer, dispersibility index 1 is 3.5 $\mu$m$^{-1}$ or more, and dispersibility index 2 is 10 or more. Meanwhile, the electrode active material layer preferably shows Index 1 of 40 $\mu$m$^{-1}$ or less. It is also preferred that the electrode active material layer shows Index 2 of 50 or less. The above-mentioned conductive material dispersibility index 1 and dispersibility index 2 may be obtained by calculating the circumference (Boundary$_{measured}$) and area (A) of a portion defined as a conductive material zone from the result (2D mapping image) obtained by subjecting at least one optional predetermined cross-section inside of the electrode active material layer to 2D-scale visual image processing, and inputting the resultant values to the following Formula 1 and Formula 2.

[Formula 1]

$$\text{Index 1 (a}^{-1}) = \text{Boundary}_{measured}/A$$

wherein Boundary$_{measured}$ represents the circumference of a portion determined in a predetermined cross-section of the electrode active material layer and defined as a conductive material zone, and A represents the area of a portion determined in a predetermined cross-section of the electrode active material layer and defined as a conductive material zone. In addition, a in Formula 1 is the unit used herein. When the unit of the circumference is $\mu$m, the unit of Index 1 is $\mu$m$^{-1}$.

[Formula 2]

$$\text{Index 2} = \text{Boundary}_{measured}/L_{circle}$$

wherein Boundary$_{measured}$ is the same as defined in Formula 1, and L$_{circle}$ represents the circumference of a circle having the same area as the above-defined conductive material zone. In an optional closed curve, the closed curve having the smallest circumference is a circle. Therefore, when an imaginary circle having the same area as the total area (A) of the conductive material zone is assumed, the circumferential length of the circle is calculated, and the circumference of an actual conductive material zone is divided by the circumference of the imaginary circle to obtain a value of Index 2, it can be understood that a higher value suggests a higher dispersibility.

Herein, L$_{circle}$ may be calculated based on the following Mathematical Formula 1 and Mathematical Formula 2.

[Mathematical Formula 1]

$$r\,(\text{radius of circle}) = \sqrt{\dfrac{A}{\pi}}$$

[Mathematical Formula 2]

$$L_{circle} = (2 \times \sqrt{\pi A})$$

Therefore, the above Formula 2 may be expressed by the following Formula 2A.

[Formula 2A]

$$\text{Index } 2 = \text{Boundary}_{measured} / (2 \times \sqrt{\pi A})$$

In other words, the area of a circle is calculated according to the formula of $\{(\text{radius of circle } (r))^2 \times \pi\}$, and thus the radius (r) of the imaginary circle can be calculated therefrom, and the circumference ($2\pi r$) can be calculated, once the radius is obtained.

Herein, higher values of dispersibility index 1 and dispersibility index 2 mean that the conductive material is not aggregated and localized but is dispersed homogeneously in the electrode active material layer. In other words, 'the circumference of the conductive material zone has a higher value as compared to the area thereof, or 'the circumference of the conductive material zone has a higher value as compared to the circumference of a circle having the same area as the conductive material zone' suggests that the conductive material is distributed homogeneously in the electrode.

For example, the above Index 1 and Index 2 can be determined for each of two or more different cross-sections in the electrode active material layer, and Index 1 is 3.5 $\mu m^{-1}$ or more for all cross-sections, and Index 2 is 10 or more for all cross-sections.

According to the present disclosure, the cross-section(s) may be formed in parallel with the portion where the electrode active material layer faces the current collector. In a variant, the cross-section(s) may be formed in parallel with or perpendicular to the portion where the electrode active material layer faces the current collector, or may be formed at a predetermined angle to the portion. Since the present disclosure is intended to determine the dispersibility of a conductive material in the electrode active material layer, the angle between the exposed surface and the portion facing the current collector is not limited to any specific range, as long as the internal part of the electrode active material layer may be exposed to such a degree that Index 1 and Index 2 may be determined.

According to an embodiment of the present disclosure, Index 1 determined in the cross-section at a predetermined portion in a range corresponding to 10% of the thickness from the top to the bottom of the electrode active material layer in the thickness direction and Index 1 determined in the cross-section at a predetermined portion in a range corresponding to 10% of the thickness from the bottom to the top of the electrode active material layer in the thickness direction may be 3.5 $\mu m^{-1}$ or more. In addition, Index 2 determined in the cross-section at a predetermined portion in a range corresponding to 10% of the thickness from the top to the bottom of the electrode active material layer in the thickness direction and Index 2 determined in the cross-section at a predetermined portion in a range corresponding to 10% of the thickness from the bottom to the top of the electrode active material layer in the thickness direction may be 10 or more.

Meanwhile, the bottom of the electrode active material layer refers to the surface (current collector-facing surface) facing the current collector, and the top of the electrode active material layer refers to the surface (back surface) opposite to the current collector-facing surface and may be the surface facing a separator or a solid electrolyte membrane.

Index 1 and Index 2 may be determined by visualizing the distribution of electrode materials, particularly, a conductive material, for an optional cross-section of electrode active material layer, calculating the circumference and area of the portion (conductive material zone) in which the conductive material is distributed, and inputting the calculated values to the above formulae. Determination of the distribution of the electrode materials contained in the electrode active material layer is in a microscopic dimension of micro-scale or lower. Therefore, the visualization of the distribution of the conductive material may be carried out by using an electronic visualizing device, such as atomic force microscopy and a scanning spreading resistance microscopy, as described hereinafter.

Then, the method for calculating Index 1 and Index 2 will be explained in detail.

The method includes the steps of:

(Step 1) preparing a sample of electrode cross-section by allowing an optional cross-section inside of an electrode for an electrochemical device to be exposed;
(Step 2) acquiring resistance value data of the electrode active material and conductive material of the sample of cross-section by using scanning spreading resistance microscopy;
(Step 3) acquiring a log scale image and histogram of the resistance value data; and

(Step 4) calculating Index 1 and/or Index 2.

Hereinafter, each step of the method will be explained in more detail.

## (Step 1)

First, a dry electrode is prepared, and a sample of electrode cross-section is prepared by allowing an optional cross-section inside of an electrode for an electrochemical device to be exposed. The electrode may include an electrode active material layer formed on at least one surface of a current collector, wherein the electrode active material layer may include an electrode active material, a conductive material and a binder resin. Next, the surface of the electrode active material layer is removed to a predetermined thickness by using ion beams of ion milling to expose the cross-section inside of the electrode active material layer. The ion milling refers to a method for etching a material by accelerating inert gas ions toward the surface of a vacuum-state sample from a broad beam ion source. The ion milling is based on a sputtering phenomenon in which inert gas (e.g. argon) ions or atoms are accelerated with a suitable level of voltage so that the atoms of the sample surface may be separated off. In this manner, a sample of electrode cross-section having a clear cross-section with no physical damage may be prepared, and a conductive material zone may be seen more clearly in the electrode. According to an embodiment of the present disclosure, the inert gas may be argon. When argon ion beams are irradiated to the electrode for a secondary battery, it is possible to prepare the sample of electrode cross-section more stably. According to an embodiment of the present disclosure, the ion beam current of the ion milling system may be 100-250 μA. Particularly, the ion beam current of the ion milling system may be 110-150 μA, or 200-230 μA. When controlling the ion beam current of the ion milling system to the above-defined range, it is possible to reduce the time required for preparing the sample of electrode cross-section, to prevent redeposition of electrode materials on the sample cross-section, and thus to obtain a sample of electrode cross-section having a clearer cross-section.

Information about the electrode surface excellent in terms of roughness may be obtained by using such ion milling, and the sample may be observed through an electronic microscope, and desired information, such as visualized data, may be obtained.

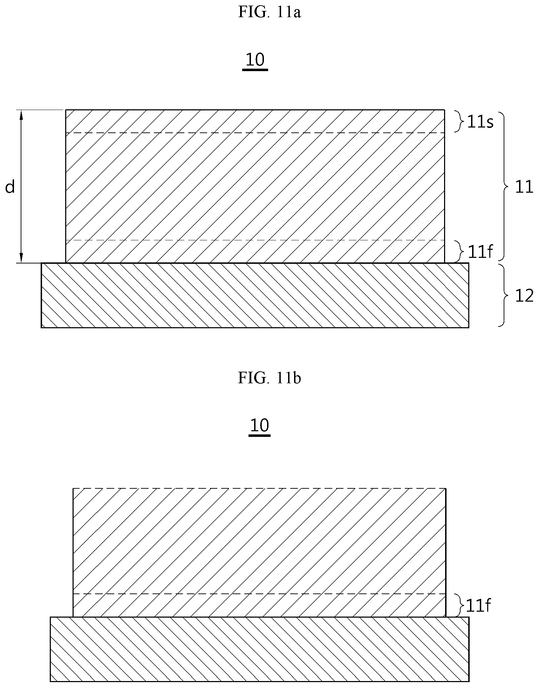

FIG. 11a and FIG. 11b are schematic views illustrating the method for preparing a sample of electrode cross-section. Referring to FIG. 11a and FIG. 11b, the sample of cross-section is obtained by etching and removing a portion 11s to a predetermined depth from the surface of the electrode active material layer based on the thickness direction (height) of the electrode active material layer through ion milling, thereby exposing a predetermined plane inside of the electrode active material layer.

Meanwhile, according to an embodiment of the present disclosure, the step of preparing a sample of electrode cross-section may further include a step of filling the internal pores of the electrode for a secondary battery with an epoxy group-containing polymer by impregnating the electrode with the epoxy group-containing polymer. The method for impregnating the electrode with the epoxy group-containing polymer may be carried out in a conventional manner known to those skilled in the art. For example, the epoxy group-containing polymer may be applied onto the electrode, or the electrode may be dipped in a polymer solution including the epoxy group-containing polymer so that the electrode may be impregnated with the solution.

According to an embodiment of the present disclosure, the method for analyzing the electrode for a battery may further include a step of measuring the resistance value of the epoxy group-containing polymer filled in the pores of the sample of electrode cross-section. The resistance value of the pores in the sample of electrode cross-section may be obtained by using scanning spreading resistance microscopy by filling the internal pores of the electrode for a secondary battery with the epoxy group-containing polymer. Particularly, the resistance value of the polymer material with which the pores are filled may be measured to obtain resistance value data. From this, it is possible to determine the zone where the pores are located, and to differentiate the electrode active material zone, conductive material zone and the pore zone of the sample of electrode cross-section more clearly from a combined image.

According to an embodiment of the present disclosure, the epoxy group-containing polymer may include an epoxy resin polymer including a cyclic structure in its molecule, particularly, an epoxy resin polymer containing an aromatic group (e.g. phenyl group). Particular examples of the epoxy group-containing polymer having an aromatic group include, but are not limited to: any one selected from biphenyl-type epoxy group-containing polymer, dicyclopentadiene-type epoxy group-containing polymer, naphthalene-type epoxy group-containing polymer, dicyclopentadiene-modified phenol-type epoxy group-containing polymer, cresol-based epoxy group-containing polymer, bisphenol-based epoxy group-containing polymer, xylol-based epoxy group-containing polymer, multifunctional epoxy group-containing polymer, phenol novolak epoxy group-containing polymer, triphenolmethane-type epoxy group-containing polymer and alkyl-modified triphenolmethane epoxy group-containing polymer, or a mixture of two or more of them. More particularly, the epoxy group-containing polymer having an aromatic group may include any one selected from epoxyethane (ethylene oxide), 1,3-epoxypropane (trimethylene oxide) and bisphenol-A-epichlorohydrin, but is not limited thereto.

**(Step 2)**

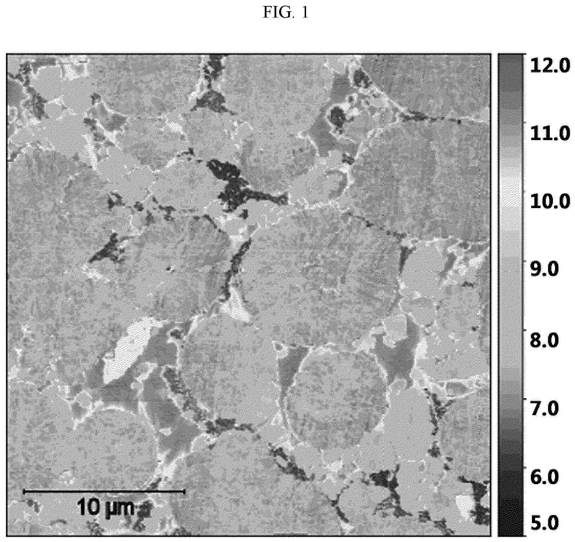

Next, a 2D-scale map about the resistance distribution of the sample of cross-section is obtained by using conduction network analysis (scanning spreading resistance microscopy), once the sample of electrode cross-section is prepared in Step 1. FIG. 1 illustrates an example of the 2D-scale map of Example 1 obtained by the above-mentioned method.

Particularly, atomic force microscopy (AFM) is used to scan the surface of the sample of cross-section to obtain an image converted into a 2D-scale. In this manner, a map in which the height of the electrical resistance value is expressed by light and shade of color is obtained, and the distribution of surface resistance can be seen visually through the difference in color tone (light and shade). First, a sample used for analysis in an atomic force microscopy (AFM) system is prepared. The sample of cross-section prepared by the above-described procedure is attached to a metal disc for AFM in such a manner that the cross-section faces upward, and silver paste is applied in such a manner that a conduction path may be formed in the portion other than the milled cross-section and the metal disc for AFM. The prepared sample for AFM analysis is loaded to the system and aligned with laser, and the cross-section is selected as a test portion with an optical microscope. Then, the electrode cross-section is allowed to be in contact with an atomic microscope probe, and current flowing through the sample between the atomic microscope probe and the contact electrode is measured to obtain spreading resistance from the measured current. According to an embodiment of the present disclosure, the driving conditions of the scanning spreading resistance microscope for analyzing the sample of electrode cross-section may be exemplified as follows. The AFM system is not particularly limited, as long as it allows visual imaging of the resistance distribution according to the scanning spreading resistance microscopy. For example, Cypher ES (available from Oxford Instrument) may be used. According to a particular embodiment of the present disclosure, Dual-gain ORCA may be used as a cantilever holder, and AR (available from Oxford Instrument) may be used as a driving software. Particular driving conditions may include setting Contact Mode, setting the pixel of an image to be acquired to a range of 512x512 to 1024x1024, setting the scanning rate to 0.2-1.0 Hz, setting the bias to 2.0 V or less, and setting the set point to 1.0 V or less. For example, the image pixel may be set to 512x512, the scan rate may be set to 0.5 Hz, the bias may be set to 2.0 V or less, and the set point may be set to 0.2 V. As an AFM probe, Solid diamond ABF probes (AD-40-As, available from Adama) made of boron-doped single crystal diamond may be used.

Meanwhile, according to an embodiment of the present disclosure, the sample of cross-section is preferably subjected to AFM, for example, in a glove box, while not being exposed to the atmosphere. Herein, the sample of cross-section may be loaded to a cell body to maintain the state not exposed to the atmosphere.

**(Step 3)**

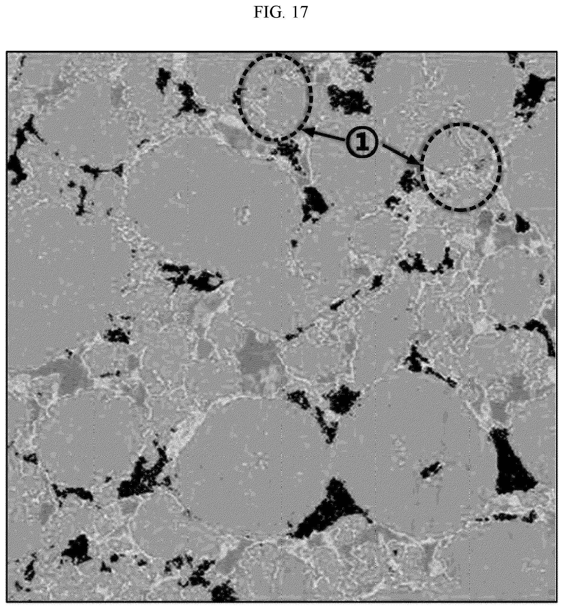

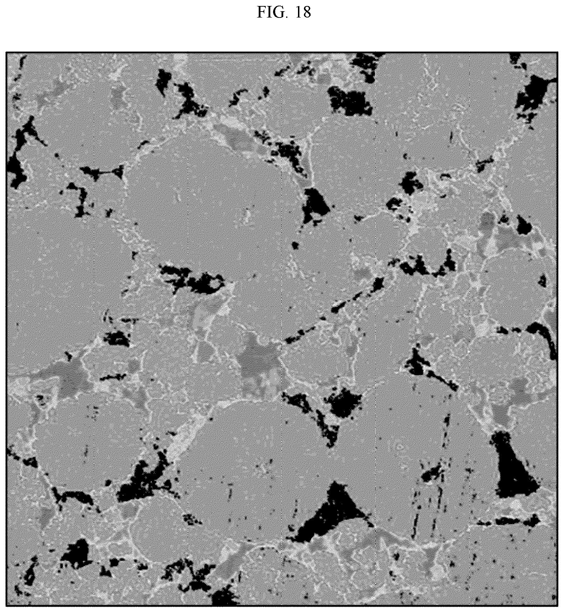

Once the 2D-scale map is obtained through Step 2, a conductive material zone is defined. Herein, the term 'defined' may also be expressed as 'masked', since a visual indication method is used. For example, FIG. 17 and FIG. 18 illustrate the electrode according to Example 7, wherein the conductive material zone determined from the histogram is masked with a black color. The method for defining the conductive material zone will be explained in more detail hereinafter.

First, the resistance value data obtained by using scanning spreading resistance microscopy may be processed and modified into a log scale to obtain a log-scale image (log (resistance) image). Once such a log-scale image is obtained, [log resistance distribution histogram] in which the ingredients forming the sample of electrode cross-section are indicated in division is extracted therefrom.

Each pixel on the histogram can determine whether the zone corresponding to the pixel is an electrode active material zone, a pore or binder zone or a conductive material zone, and the information of each pixel determined in terms of the zone corresponding thereto may be used to quantify the distribution of conductive material zone in the 2D mapping image.

Particularly, a $\log(R/Q)$ value corresponding to the minimum value between the conductive material peak and the electrode active material peak in the histogram is taken as a threshold, and a zone having a value smaller than the threshold is masked as a conductive material zone. Herein, in order to ensure more accurate information about the conductive material zone, the value may be corrected by adding/subtracting a value of 0.1-5 to/from the minimum value.

According to an embodiment of the present disclosure, the correction may be adding a value of 0.1-0.5 to the $\log(R/Q)$ value corresponding to the minimum value. This is for the purpose of correcting the portion not indicated as the conductive material zone due to the overlap of the active material zone with the conductive material zone. For example, the corrected value may be obtained, for example, by dividing the histogram into the left side and the right side with the conductive material zone peak taken as a center, and correcting the bottom point of the right-side zone so that it may have the same value as the horizontal distance to the left-side bottom point at the peak.

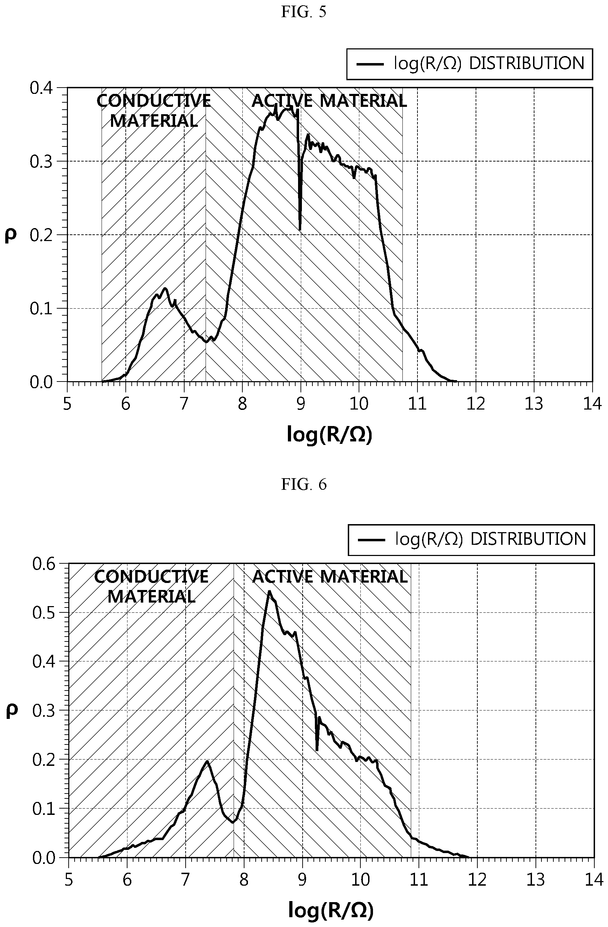

FIG. 5, FIG. 6 and FIG. 12a illustrate [log (resistance) distribution histogram] of the electrode according to each of Example 1, Comparative Example 1 and Example 7, extracted based on the log scale image (log (resistance) image).

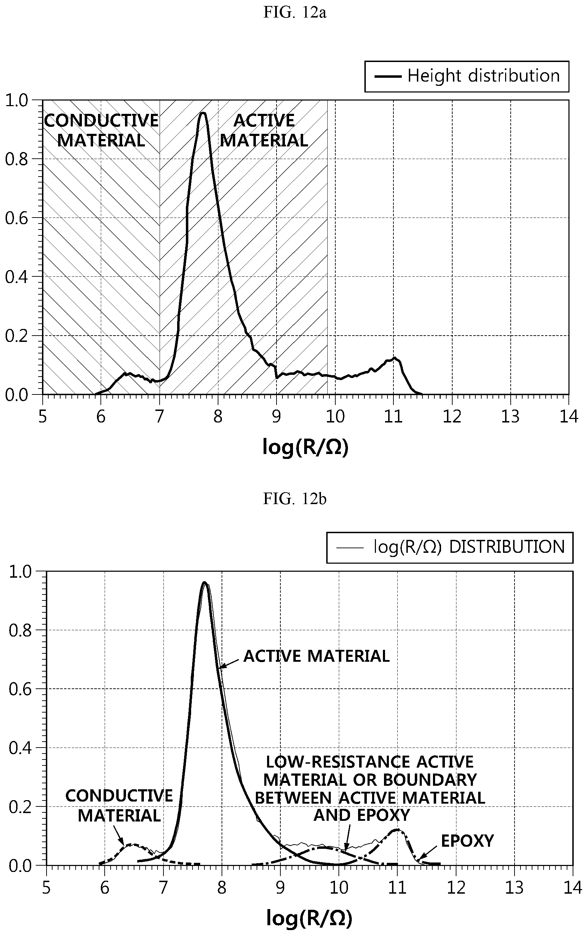

Referring to FIG. 5, FIG. 6 and FIG. 12a, the conductive material peak and the electrode active material peak can be determined, and the minimum value between both peaks may be specified. However, as described above, since a non-indicated conductive material zone caused by the overlap with the active material zone is present in the zone beyond the minimum value, the value is corrected as described above. FIG. 12b shows an exemplary predicted embodiment of the conductive material zone overlapped with the active material in the electrode according to Example 7.

When such correction is carried out, even the portion not indicated as the conductive material zone due to the overlap of the active material zone with the conductive material zone can be indicated as the conductive material zone, and thus more accurate dispersibility data can be ensured.

Meanwhile, FIG. 17 illustrates the conductive material zone masked in an SSRM image based on the value before correction. The masking of the conductive material zone is performed with a color not shown in the original image, and in this embodiment, the conductive material zone is masked with a black color. In FIG. 17, the portion corresponding to the conductive material but remaining in a non-masked state can be seen from the circular portion marked by a dotted line. The non-masked portion is determined as a portion maintaining a blue color, when the color is checked. Meanwhile, FIG. 18 illustrates the conductive material zone masked based on the value after correction. Herein, it can be seen from FIG. 18 that the portion not masked in FIG. 17 (portion maintaining a blue color) is masked with a black color.

Meanwhile, the zone positioned in the active material in the zone masked as a conductive material zone is deleted to eliminate an error. This is an error generated during a process for preparing a sample, for example, due to the contamination of the active material cross-section exposed during the cross-section sample preparation step with the conductive material, or an error generated during the imaging processing, and it is obvious that the conductive material is not distributed inside of the active material in an actual electrode. Therefore, such errors are removed preferably.

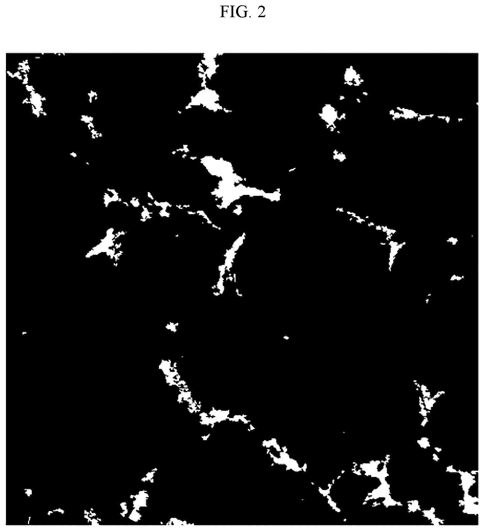

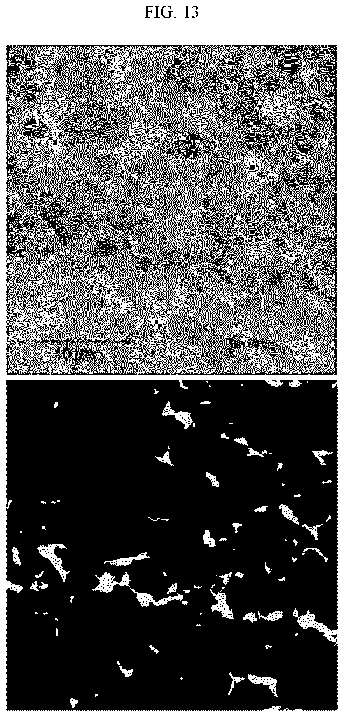

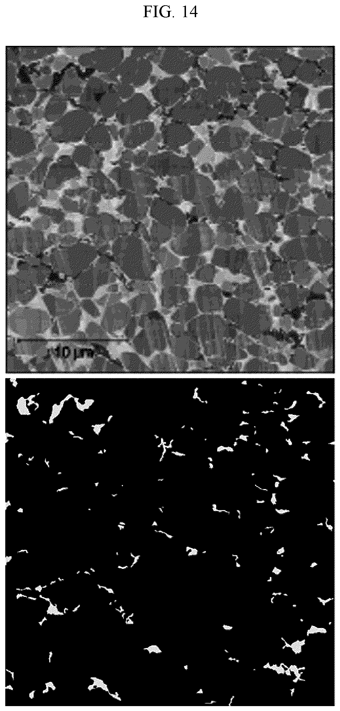

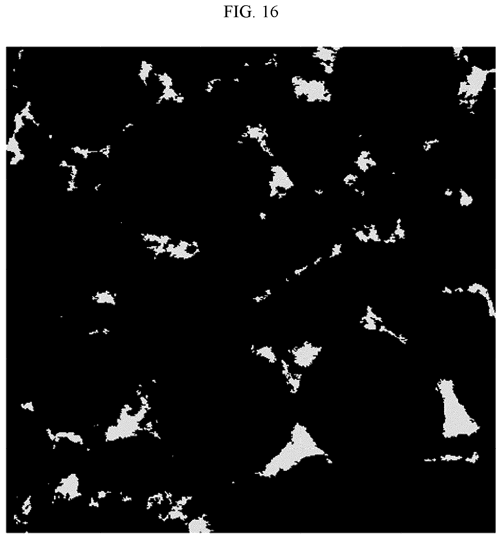

Meanwhile, after masking the conductive material zone, an image in which only the conductive material zone is indicated is extracted (contrast masking) as shown in FIG. 2, FIG. 4, FIG. 6, the bottom of FIG. 13, the bottom of FIG. 14 and FIG. 16, and is provided to the calculation of Step 4.

According to an embodiment of the present disclosure, the conductive material zone may be masked by using a program which carries out visual processing of data obtained through scanning probe microscopy, such as AFM. According to an embodiment of the present disclosure, the masking may be carried out by using Gwyddion software. Meanwhile, when a lot of images having an excessively small pixel size is present in the images, it is difficult to accurately determine the circumference or area of the conductive material zone, and such images may function as noise in calculating dispersibility, thereby causing an error. Therefore, such excessively small pixel images may be removed, while the masking is carried out. For example, when using Gwyddion program, the grain-filtering function may be used to delete small zones of less than 3 pixel so that they may not be masked as conductive material zones. When such fine zones of less than 3 pixel are included, the circumference of the conductive material zone may be calculated into an excessively high value. Therefore, the fine zones are removed before determination. Meanwhile, FIG. 5 illustrates a histogram obtained by the above-described method, and it can be seen that the active material zone is differentiated from the conductive material zone.

### (Step 4)

When the masking of the conductive material zone is completed in (Step 3) (i.e. the conductive material zone is defined), the circumference and area of the masked zone are determined, and Index 1 may be calculated therefrom according to Formula 1. In Formula 1, the circumference of the masked zone is applied to Boundary$_{measured}$, and the area of the masked zone is applied to A.

In addition, the radius of a circle having the same area as the masked zone is calculated, and the circumference of the circle can be calculated therefrom. The circumference of the circle may be input to Boundary$_{measured}$ to calculate Index 2 according to Formula 2.

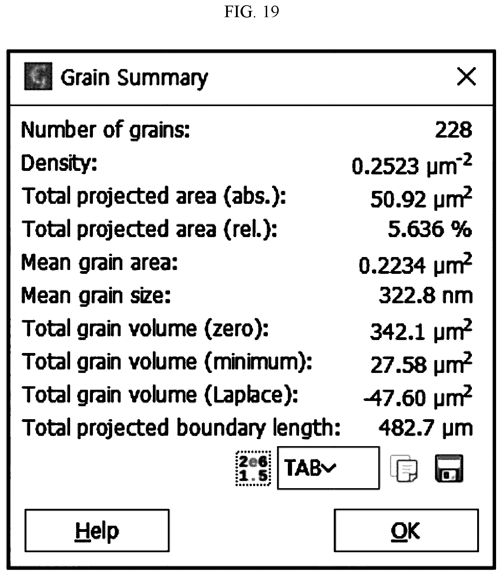

Meanwhile, according to the present disclosure, the area and circumference of the masked conductive material zone may be calculated by using an image processing program, such as Gwyddion software. FIG. 19 illustrates a display screen showing the area and circumference calculated through the program.

### Method for Manufacturing Dry Electrode

According to an embodiment of the present disclosure, the dry electrode satisfying the above Index 1 and Index 2 may be obtained by the following method.

For example, the method for manufacturing a dry electrode includes the steps of:

(S10) preparing a powdery blend including an electrode active material, a conductive material and a binder polymer;
(S20) kneading the powdery blend at 70-200°C to prepare mixture lumps;
(S30) grinding the mixture lumps to obtain a mixed powder for a dry electrode containing mixed particles; and

(S40) carrying out calendering of the mixed powder for a dry electrode to obtain a free standing-type dry electrode film.

In addition, the dry electrode film may be laminated to one surface of both surfaces of an electrode current collector to provide a dry electrode (S50).

**Preparation of Mixed Powder**

First, a mixed powder for a dry electrode is prepared.

The mixed powder for an electrode is a powdery electrode material including an electrode active material and a binder polymer. For example, as described hereinafter, the mixed powder for an electrode may be obtained by pulverizing mixture lumps containing an electrode active material and a binder polymer. As used herein, the term 'mixed powder' refers to an aggregate formed by aggregation of mixed particles containing two or more electrode material particles. Each individual mixed particle forming the mixed powder may include at least one selected from an electrode active material, a binder and a conductive material. According to a particular embodiment, the mixed particle may include an electrode active material and a binder. In addition, the particle may further include a conductive material. Meanwhile, the mixed powder for a dry electrode may include at least one of the electrode active material, a binder and the conductive material not forming such mixed particles but remaining as they are.

Meanwhile, the mixed powder for an electrode may be obtained as follows.

**Dry Blending**

First, prepared is an electrode material mixture containing an electrode active material and a binder polymer. The electrode material mixture may optionally further include the conductive material as described above and/or additives, and the content ratio of the ingredients is the same as described above. The mixing step for preparing the mixture is carried out in such a manner that the electrode materials, including the electrode active material and the binder polymer, may have a homogeneous disperse phase in the mixture. The electrode according to an embodiment of the present disclosure is provided as a dry electrode using no solvent, and thus the mixing step is carried out in a powder phase without introducing any solvent thereto. Therefore, the mixing may be carried out by using various processes with no particular limitation, as long as the electrode materials can be mixed simply. For example, the mixing step may be carried out by introducing the electrode materials to a known instrument, such as a mixer or a blender, and carrying out agitation.

According to a particular embodiment, the electrode materials may be introduced to and mixed in a device, such as a mixer or a blender, in the state of powder.

According to an embodiment of the present disclosure, the mixing time is not particularly limited, but may be carried out for 1 second to 10 minutes. Meanwhile, the mixing speed is not particularly limited, but may be controlled suitably within a range of about 3,000-30,000 rpm. For example, with a view to of ensuring high homogeneity, the mixing step may be carried out in a mixer at 5,000-20,000 rpm for 30 seconds to 2 minutes, particularly, at 10,000-15,000 rpm for 30 seconds to 1 minute.

As described hereinafter, the binder resin is fibrilized mainly through step (S20). However, coarse fibrilization may also be carried out partially in step (S10).

**Binder Fibrilization Step**

Next, the resultant electrode material mixture is subjected to a fibrilization step in order to fibrilize the binder polymer. According to the present disclosure, low-shear kneading may be used preferably for the fibrilization step. For example, the kneading may be carried out through a kneader. The binder polymer is fibrilized by the kneading step, and the electrode materials, including the electrode active material, introduced in the form of powder are bound or interconnected by the fibrilized binder, thereby forming mixture lumps. Since the kneading is carried out without introducing any solvent, the mixture lumps may have a solid content of 100%. The electrode active material and the conductive material are bound to each other or interconnected, while the binder resin is fibrilized through such kneading, thereby providing a lump-shaped mixture.

According to an embodiment of the present disclosure, the kneading may be carried out at a rate controlled to 10-100 rpm. For example, the kneading may be carried out at a rate controlled to 20 rpm or more, or 40 rpm or more, within the above-defined range, and the upper limit may be controlled to a speed of 70 rpm or less. The kneading may be carried out for 1-10 minutes. For example, the kneading may be carried out at speed of 40-70 rpm for 3-7 minutes, within the above-defined ranges.

More preferably, the kneading may be carried out within 5 minutes, or within 3 minutes. The lower the tap compression ratio of the resultant mixed powder for an electrode is, the higher the processability of the manufacture of an electrode film using the powder is. In addition, the tap compression ratio is reduced in the early stage of kneading, and then undergoes little change after a certain time point. Since an excessive kneading time results in excessive fibrilization and causes the fibrilized binder resin filaments to be broken. Therefore, the kneading time is controlled to the above-defined range to ensure an adequate tap compression ratio sufficiently.

Meanwhile, the kneading may be carried out at a shear rate controlled to a range of 10/s to 500/s. According to an embodiment of the present disclosure, the kneading may be carried out for 1-30 minutes, and the shear rate may be controlled to a range of 30/s to 100/s.

In addition, the kneading step may be carried out under the condition of a high temperature and a pressure equal to or higher than the ambient pressure. Particularly, the kneading step may be carried out under a pressure equal to or higher than the ambient pressure. More particularly, the kneading step may be carried out at 20-230°C. Within the above defined range, the kneading temperature may be controlled to 20°C or higher, or 50°C or higher, and the upper limit may be controlled to a range of 230°C or lower, or 200°C or lower.

When the kneading is carried out at a low temperature beyond the above-defined range, fibrilization of the binder polymer and lumping of the materials cannot be performed well, and thus it is not easy to carry out filming in the subsequent calendering step of forming a sheet-like electrode film. Meanwhile, when the kneading is carried out at an excessively high temperature, there are problems in that fibrilization of the binder polymer occurs rapidly and previously formed fibers may be cut by the shear force applied continuously during the kneading step.

In addition, the kneading step may be carried out under a pressure equal to or higher than the ambient pressure, particularly under a pressure of 1-3 atm, and more particularly 1.1-3 atm. When carrying out the kneading under an excessively high pressure beyond the above-defined condition, there are problems in that previously formed fibers may be cut or the mixture lump density may be increased excessively due to the application of excessive shear force and pressure. In other words, according to an embodiment of the present disclosure, when carrying out a low-shear mixing process under the condition of a high temperature and a pressure equal to or higher than the ambient pressure, instead of high-shear mixing, it is possible to accomplish the desired effects of the present disclosure, but the scope of the present disclosure is not limited thereto.

**Grinding**

Then, the mixture lumps obtained from the kneading step is pulverized to obtain a powdery electrode mixture.

The mixture lumps obtained through the kneading may be directly subjected to pressurization (calendering) to be molded in the form of a sheet. However, in this case, it is required to apply a high pressure and high temperature to the mixture lumps in order to mold them to a target thickness. As a result, there are problems in that the dry film may have excessively high density, or a uniform film cannot be obtained. Therefore, according to the present disclosure, the mixture lumps are subjected to pulverization to obtain a mixed powder for an electrode.

Herein, the pulverization may be carried out by using a pulverizing instrument, such as a blender or a grinder, but is not limited thereto. Particularly, the pulverization may be carried out at a rate of 5,000-20,000 rpm, or 10,000-18,000 rpm, for 30 seconds to 10 minutes, particularly for 30 seconds to 1 minute. When the pulverization is carried out under an excessively low rpm condition beyond the above-defined condition or for an excessively low period of time, there are problems in that pulverization cannot be performed sufficiently to generate powder particles having a size unsuitable for filming. When the pulverization is carried out under an excessively high rpm condition or for an excessively long period of time, a lot of micropowder may be generated undesirably.

According to an embodiment of the present disclosure, the mixed particles obtained through the pulverization step may have a particle diameter ($D_{50}$) controlled suitably within a range of 10-800 $\mu$m. According to a particular embodiment, the particle diameter ($D_{50}$) of the mixed particles may be controlled within a range of 100-800 $\mu$m.

Meanwhile, according to an embodiment of the present disclosure, the mixed powder for an electrode prepared as described above includes PTFE and/or polyolefin as a binder resin, and the binder resin may have a crystallization degree (Xc) of 20% or less.

Herein, the crystallization degree (Xc) of the binder may be determined by using differential scanning calorimetry (DSC) based on the temperature (peak temperature) at the point where the highest enthalpy appears during the crystallization. Particularly, the crystallization degree is expressed by dividing the enthalpy of melting ($\Delta$Hm) measured through DSC by the enthalpy of melting ($\Delta$Hm°) (heat of melting at equilibrium) of theoretically perfect crystals (crystallization degree 100%) in the unit of %, and may be calculated according to the following Formula 3. Herein, the enthalpy of melting ($\Delta$Hm°) of theoretically perfect crystals may refer to Polymer Handbook (J. Brandrup et.al, 2003) or academic paper, such as Polymer. For example, the enthalpy of melting of theoretically perfect crystals of PTFE is generally 85.4 J/g (Polymer Vol. 46 (2005) 8872-8882). Meanwhile, data of thermo-analysis, such as DSC, of a polymer may be determined and calculated according to ASTM D3418-21.

[Formula 3]

$$Xc\ (\%) = (\triangle Hm/\triangle Hm°)\ X\ 100\ (\%)$$

Meanwhile, according to an embodiment of the present disclosure, it is advantageous in terms of minimization of micropowder generation and improvement of filming processability of a powder that the mixed powder for an electrode has a low resistivity value. According to an embodiment of the present disclosure, the mixed powder preferably has a resistivity of 700 $\Omega$·cm or less, when being pressurized under a pressure of 50 MPa. When the resistivity does not fall within the above-defined range or is excessively high, the resultant laminate film and dry electrode may have a high resistance to cause degradation of the performance of a battery, undesirably.

The resistivity may be calculated by introducing 2g of electrode powder to a ceramic container having a diameter of 22 mm and including a 4-point probe at the bottom, measuring the resistance after carrying out pressurization under a force of 2,000 kgf, i.e. about 50 MPa, and multiplying the resultant resistance by the thickness of the electrode powder.

**Dry Electrode Film and Dry Electrode**

The present disclosure also relates to a dry electrode film including the mixed powder and a dry electrode including the dry electrode film. The dry electrode film refers to a film prepared in the form of a free standing-type sheet by using electrode materials, including an electrode conductive material and a binder, without introducing any solvent. As used herein, the term 'free standing-type' refers to an object which can maintain its own shape without relying on other members and can be transferred or handled by itself. As described hereinafter, the dry electrode film may be formed by compressing a mixed powder for an electrode. For example, the dry electrode film may have a shape of layered structure formed by integration of the mixed powder for an electrode through compression. According to the present disclosure, the dry electrode includes an electrode active material layer derived from the dry electrode film. For example, the dry electrode may include a current collector, and an electrode active material layer derived from the dry electrode film and disposed on at least one surface of the current collector, wherein the dry electrode film and the current collector may be bound to each other through a lamination process, or the like.

Hereinafter, a method for manufacturing a dry electrode film and a dry electrode will be explained in detail.

**Method for Manufacturing Dry Electrode Film**

According to an embodiment of the present disclosure, the dry electrode film may be obtained through the compression molding of the mixed powder for an electrode. Herein, the process of compressing the mixed powder for an electrode to obtain a sheet-like dry electrode film is referred to as a calendering process. The dry electrode film may be prepared in the form of a sheet having a predetermined thickness through the calendering process. For example, the dry electrode film may have a strip-like shape having an aspect ratio of larger than 1. According to an embodiment of the present disclosure, the dry electrode film may have a thickness of 50-300 $\mu$m.

For example, the calendering process may be carried out by supplying the mixed powder for an electrode to a calendering device and carrying out thermal compressing by using the roll press(es) contained in the calendering device. In addition, the calendering process may be carried out by a roll-to-roll continuous process.

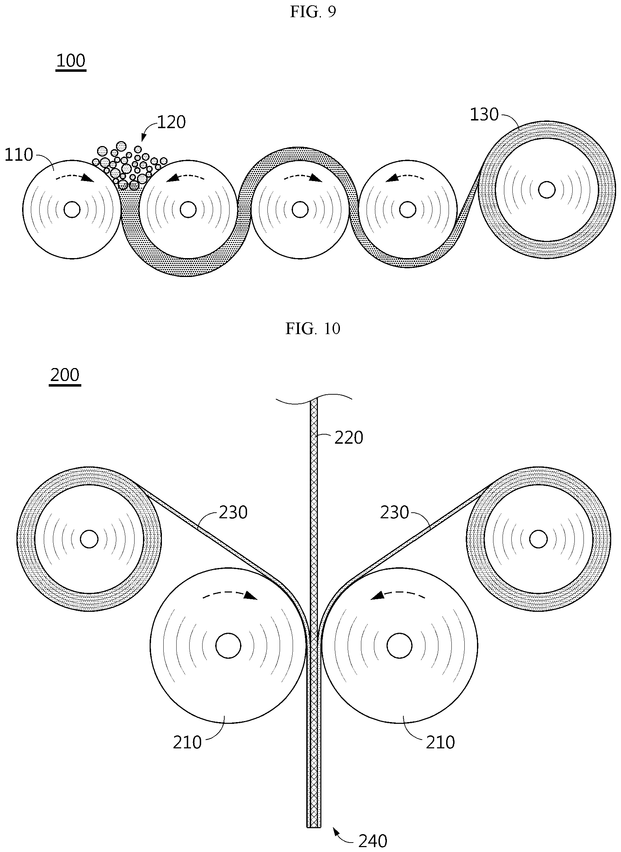

According to an embodiment of the present disclosure, the calendering device includes a roll press unit including two rollers facing each other, and the mixed powder for an electrode may be passed through the roll press unit and compressed into a sheet-like shape. A plurality of roll press units may be disposed continuously so that compression of the dry electrode film may be carried out many times. The number of roll press unit may be controlled suitably considering the thickness or pressing ratio of the dry electrode film. FIG. 9 is a schematic view illustrating the calendering process 100. Referring to FIG. 9, pressurization of the mixed powder 120 for an electrode is carried out many times by the calendering device including a plurality of calendering rollers 110 to provide a mixture film 130 for an electrode.

Meanwhile, independently in each roll press unit, the two rollers may be controlled to a suitable rotation speed ratio within a range of 1:1-1:10. For example, the rollers in at least one roll press unit may be controlled to a rotation speed ratio of 1:1-1:3. In addition, independently in each roll press unit, the rollers may be controlled to a temperature ranging from room temperature 100°C to 250°C. The dry electrode film may be obtained through such a calendering process. According to an embodiment of the present disclosure, in the resultant dry electrode film, the binder resin may have a crystallization degree (d) controlled to 10% or less. When the binder resin in the dry electrode film has a crystallization degree of larger than 10%, the crystallization degree may be controlled by adjusting the gap between the two rollers of the roll press unit or controlling the rotation speed ratio. For example, the fibrilization degree of the binder resin may be increased by reducing the gap and/or by increasing the rotation speed ratio. When controlling the crystallization degree to 10% or less as mentioned above, the dry electrode film may have increased flexibility, and thus there is an advantage in that the dry electrode film is not broken or cracked, when being wound and stored or dewound. In addition, such increased flexibility may result in improvement of mechanical strength, such as improvement of tensile strength and tensile elongation.

Meanwhile, according to an embodiment of the present disclosure, the dry electrode film may have a porosity of 20-50 vol%. Within the above-defined range, the porosity may be controlled preferably to a value of 40 vol% or less, or 35 vol% or less. When the porosity satisfies the above-defined range, there are various preferred effects. On the other hand, when the porosity is excessively small beyond the above-defined range, it is difficult to perform wetting with an electrolyte, which is not preferred in terms of life characteristics, output characteristics, or the like. When the porosity is excessively large, the volume required to realize the same capacity is increased, which is not preferred in terms of energy density based on volume. According to an embodiment of the present disclosure, the porosity may be obtained by determining the apparent density of the dry electrode film and by using the true density calculated based on the true density of each ingredient and composition, according to the following Formula 4.

[Formula 4]

$$\text{Porosity (vol\%)} = \{1-(\text{Apparent density/True density})\} \times 100$$

**Method for Manufacturing Dry Electrode**

Hereinafter, the method for manufacturing the dry electrode according to an embodiment of the present disclosure will be explained. According to an embodiment of the present disclosure, the dry electrode may be obtained by binding the dry electrode film with the current collector through a lamination process. Particularly, the dry electrode film obtained as described above is stacked on one surface or both surfaces of the current collector, and the current collector and the dry electrode film are bounded through a lamination process to obtain an electrode. The lamination may be a step of pressing and attaching the dry electrode film onto a current collector. The lamination may be carried out by using a lamination roller, wherein the lamination roller may be controlled to a temperature of 20-250°C. FIG. 10 is a schematic view illustrating the lamination process 200 according to an embodiment of the present disclosure. Referring to FIG. 10, the dry electrode film 230 is laminated with a current collector 220 to provide a dry electrode 240, wherein the lamination process is carried out by using a lamination roller 210. Meanwhile, according to the present disclosure, the dry electrode film attached to the current collector through the lamination may also be referred to as an electrode active material layer. In addition, according to the present disclosure, the dry electrode film and the electrode active material layer are derived from the mixed powder for an electrode, and the content ratio of the ingredients in the dry electrode film and the electrode active material layer may fall within the same range as the mixed powder.

**QBR**

Meanwhile, according to an embodiment of the present disclosure, the binder polymer may include a fluorine-containing binder, and the electrode active material layer may have a quantified binder ratio (QBR) of 1.1 or less.

The QBR is defined by the following Formula 5:

[Formula 5]

$$QBR = Bs/Bf,$$

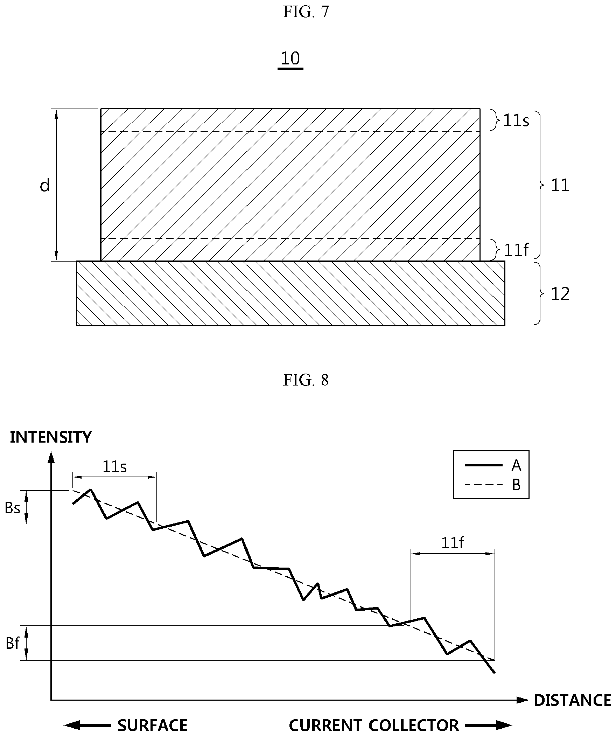

wherein Bs represents the average value of fluorine content in the surface region of the electrode active material layer ranging from the outermost surface of the electrode active material layer to up to 15% of the total thickness of the electrode active material layer, and Bf represents the average value of fluorine content of the bottom region of the electrode active material layer ranging from the electrode active material layer interface facing the current collector to up to 15% of the total thickness of the electrode active material layer. FIG. 7 is a schematic view illustrating the electrode according to an embodiment of the present disclosure. Referring to FIG. 7, the electrode 10 includes: an electrode current collector 12; and an electrode active material layer 11 positioned on the electrode current collector 12, and including an electrode active material and a binder polymer. The electrode active material layer 11 has, based on its total thickness d, an electrode active material layer surface region 11s ranging from the outermost surface of the electrode active material layer to up to 15% of the total thickness d of the electrode active material layer, and an electrode active material layer bottom region 11f ranging from the electrode active material layer interface facing the current collector to up to 15% of the total thickness d of the electrode active material layer. In the mathematical formula of QBR, Bs represents the average vale of fluorine content in the electrode active material layer surface region 11s, and Bf represents the average value of fluorine content in the electrode active material layer bottom region 11f. Herein, QBR may be calculated by the following method.

First, an electrode, QBR of which is to be determined, is selected, and the section of the electrode is obtained by using argon ion milling. Next, an energy dispersive X-ray spectroscopy (EDS) detector of a scanning electronic microscopy (SEM) instrument is used to perform EDS mapping of the ingredients in the electrode active material layer of the electrode section.

Then, a line profile is extracted from the EDS mapping results in the electrode active material layer thickness direction, and the average value Bs of fluorine content of the fluorine-containing binder of the electrode active material layer surface region and the average value Bf of the fluorine content of the fluorine-containing binder of the electrode active material layer bottom region are extracted from the line profile results. After that, QBR is calculated by using the above Formula 5.

Herein, the electrode active material layer surface region is a zone ranging from the outermost surface of the electrode active material layer to up to 15% of the total thickness d of the electrode active material layer in the thickness direction of the electrode active material layer, and the electrode active material layer bottom region is a zone ranging from the electrode active material layer interface facing the current collector to up to 15% of the total thickness d of the electrode active material layer.

FIG. 8 is a schematic view illustrating calculation of the QBR value of an electrode active material layer. Referring to FIG. 8, X-axis represents the thickness of the electrode active material layer, i.e. distance from the surface toward the current collector, and Y-axis represents the intensity of fluorine ingredient. Line A represents the intensity of fluorine ingredient of the fluorine-containing binder extracted through EDS mapping of fluorine ingredient in the electrode active material layer of the electrode section, and line B represents a tendency line showing a tendency of line A and is plotted by the LOWESS smoothing method, i.e. through smoothing in a locally-weighted scatter plot smoother mode.

The QBR value is a value illustrating the uniformity of the distribution of the fluorine-containing binder in the thickness direction of the electrode active material layer by means of the ratio of the content of fluorine-containing binder contained in the surface region of the electrode active material layer based on the content of fluorine-containing binder contained in the bottom region of the electrode active material layer. Herein, the content of fluorine-containing binder may be inferred through the fluorine ingredient contained in the fluorine-containing binder.

The QBR value is 1.1 or less. According to an embodiment of the present disclosure, the QBR value may be 0.95 or more, or 0.97 or more, and 1.03 or less, or 1.05 or less, or 0.95-1.05. When the QBR value satisfies the above-defined range of 1.1 or less, there is no problem of an increase in the content of fluorine-containing binder contained in the surface region of the electrode active material layer based on the content of fluorine-containing binder contained in the bottom region of the electrode active material layer. As a result, the binder distribution in the thickness direction of the electrode active material layer becomes uniform, and the content of binder at the portion near the current collector is not reduced, and thus the adhesion between the current collector and the electrode active material layer is improved, and the conductivity on the surface of the electrode active material layer and charge/discharge rate are also improved. Particular examples of the fluorine-containing binder include PVDF-based copolymers, such as polytetrafluoroethylene (PTFE), polyvinylidene fluoride (PVDF) and polyvinylidene fluoride-co-hexafluoropropylene (PVDF-HFP), or two or more of them. In addition, the fluorine-containing binder may include polytetrafluoroethylene alone, or polytetrafluoroethylene in combination with at least one of PVDF-based copolymers, such as polyvinylidene fluoride (PVDF) and polyvinylidene fluoride-co-hexafluoropropylene (PVDF-HFP).

**Compression Ratio**

Meanwhile, according to an embodiment of the present disclosure, the dry electrode film may have a compression ratio of 30-50%, 35-50%, or 40-50%. The compression ratio may be defined as the ratio of the compressed thickness of a dry electrode film at the moment of lamination for binding the dry electrode film with a current collector, and may be represented by the following Formula 6.

$$[\text{Formula 6}]$$

$$\text{Compression ratio (\%)} = T_p/T_1 \times 100$$

wherein $T_p$ represents the pressurized thickness of a dry electrode film in the lamination step, and $T_1$ represents the thickness of a dry electrode film before the lamination step.

According to the present disclosure, the lamination step may be controlled to satisfy a specific compression ratio. In this manner, it is possible to provide the dry electrode film with adequate density and porosity, and to realize excellent adhesion between the dry electrode film and the current collector.

When the dry electrode film satisfies a compression ratio of 30-50%, the pressure applied to the dry electrode film is sufficient so that the adhesion between the dry electrode film and the current collector may be improved. In addition, it is possible to prevent the problem of detachment of the dry electrode film from the current collector after the lamination step, and to solve the problem of an undesired increase in density of the dry electrode film, a decrease in porosity of the dry electrode film as compared to a target porosity, or damages to the current collector.

According to an embodiment of the present disclosure, when dry electrode film is laminated onto both surfaces of the current collector, the compression ratio (%) of Formula 6 may be expressed by the following Formula 7.

[Formula 7]

$$30 \leq (T_1 + 0.5T_c - 0.5T_{gap})/T_1 \times 100 \leq 50$$

wherein $T_1$ represents the thickness of a dry electrode film before the lamination step, $T_c$ represents the thickness of a current collector, and $T_{gap}$ represents an interval between a first pressing roll and a second pressing roll.

In addition, the dry electrode film subjected to the lamination step may have a pressing ratio of 20% or less, 18% or less, 15% or less, 5-15%, 6-15%, 7-15%, or 9-13%. The dry electrode film after carrying out the lamination step may be regarded as an electrode active material layer. Herein, the pressing ratio may be defined as a ratio of the thickness of a dry electrode film after the lamination step based on the thickness of the dry electrode film before the lamination step, and may be represented by the following Formula 8.

[Formula 8]

$$\text{Pressing ratio (\%)} = (T_1 - T_2)/T_1 \times 100$$

wherein $T_1$ represents the thickness of a dry electrode film before the lamination step, and $T_2$ represents the thickness of the dry electrode film after the lamination step. When the pressing ratio satisfies the above-defined range, it is possible to provide the resultant dry electrode with adequate density and porosity, and to realize excellent adhesion to the current collector.

Before and after the lamination of the dry electrode film with the current collector, an increase in apparent density may be represented by the following Formula 9:

[Formula 9]

$$\text{Increase in apparent density (\%)} = (D_2 - D_1)/D_1 \times 100$$

wherein $D_1$ represents the apparent density (g/cm$^3$) of a dry electrode film before the lamination step, and $D_2$ represents the apparent density (g/cm$^3$) of a dry electrode film (i.e. electrode active material layer) after the lamination step.

The dry electrode film may have an increase in apparent density of 5-30%, 7-25%, or 10-20%, before and after its lamination with the current collector. Herein, each of $D_1$ and $D_2$ may range from 2.75 g/cm$^3$ to 3.5 g/cm$^3$. Meanwhile, when the dry electrode film satisfies the above-defined range of an increase in apparent density, it is possible to improve the adhesion between the dry electrode film and the current collector and to prevent the problem of damages to the positive electrode active material or current collector, caused by a porosity beyond the target range.

Such an increase in apparent density before and after the lamination of the dry electrode film with the current collector may be calculated by measuring the weight and thickness of the dry electrode film before lamination, measuring the weight and thickness of the electrode after lamination, and calculating the weight and thickness of the film from which the weight and thickness of the current collector are subtracted.

According to an embodiment of the present disclosure, the dry electrode may have an active material loading amount of 2.5-15 mAh/cm$^2$, particularly 4-10 mAh/cm$^2$. Herein, the active material loading amount is a value calculated according to the following Formula 10:

Active material loading amount (mAh/cm$^2$) = Capacity (mAh/g) of active material x Weight ratio (wt%) of active material in dry electrode film $\times$ Weight per unit area (g/cm$^2$) of dry electrode film  [Formula 10]

In addition, the interfacial resistance between the electrode active material layer and the current collector in the dry electrode may be 5 $\Omega \cdot$cm$^2$ or less, particularly 2 $\Omega \cdot$cm$^2$ or less. Herein, the interfacial resistance may be calculated by determining the resistance value between the dry active material layer and the current collector as a potential difference measured among multiple probes, after applying an electric current of 100 μA to the electrode through the multiprobe (MP) resistance test method. When the interfacial resistance satisfies the above-defined range, the secondary battery obtained subsequently may be provided with improved performance.

The present disclosure also relates to an electrode assembly including the dry electrode obtained as described above, and an electrochemical device including the same. The electrode assembly may include a positive electrode, a negative electrode and a separator layer interposed between the positive electrode and the negative electrode. In a variant, the electrode assembly may include a positive electrode, a negative electrode and a solid electrolyte membrane interposed between the positive electrode and the negative electrode. In each embodiment, the positive electrode and/or the negative electrode may be the above-described electrode.

According to the present disclosure, the electrochemical device includes any device which carries out electrochemical reaction, and particular examples thereof include all types of primary batteries, secondary batteries, fuel cells, solar cells or capacitors, such as super capacitor devices. Particularly, among the secondary batteries, preferred are lithium secondary batteries, including lithium metal secondary batteries, lithium-ion secondary batteries, lithium polymer secondary batteries or lithium-ion polymer secondary batteries.

Examples, Comparative Examples and Test Examples will be described more fully hereinafter so that the present disclosure can be understood with ease.

### [Examples]

### Preparation of Mixed Powder for Electrode and Manufacture of Dry Electrode Film

### Examples 1-4 and 7

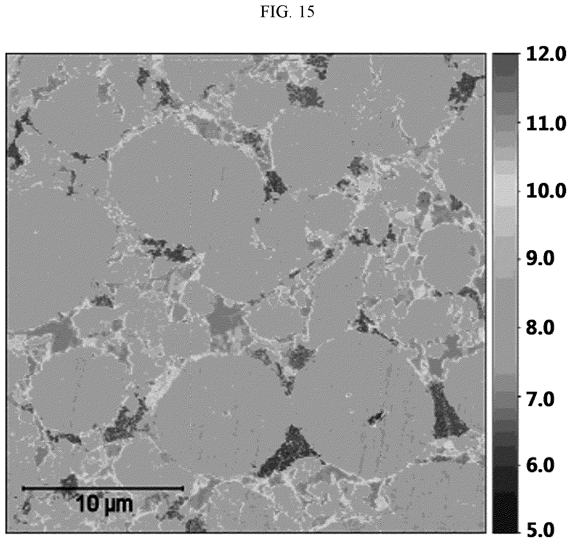

First, lithium nickel cobalt manganese aluminum composite oxide (Li(Ni, Co, Mn, Al)O$_2$), carbon black and polytetrafluoroethylene (PTFE) were introduced to a blender and mixed therein at about 10,000 rpm for about 1 minute to prepare a mixture. Next, a kneader was stabilized at a temperature of 150°C, and the resultant mixture was introduced to the kneader and kneaded therein under a pressure of about 1.1 atm to obtain mixture lumps. Herein, the kneading step was carried out at a rate of about 50 rpm for about 5 minutes. The mixture lumps were introduced to a blender, pulverized therein at about 10,000 rpm for about 40 seconds and classified by using a sieve having pores of 1 mm to obtain a mixed powder for an electrode. Then, the mixed powder for an electrode was introduced to a first lab calender (roll diameter: 88 mm, roll temperature: about 100°C, about 20 rpm) to carry out compression, thereby providing a dry electrode film. After that, the resultant dry electrode film was disposed on both surfaces of aluminum foil (thickness 19 μm) and laminated through a lamination process while maintaining the temperature at about 150°C to obtain an electrode. The electrode active material layer on one surface of the resultant electrode had a thickness of about 80 μm. Meanwhile, the lithium nickel cobalt manganese aluminum composite oxide has a bimodal distribution and includes discrete particles having a diameter of larger particles (secondary particles) of about 10 μm and a diameter of smaller particles of about 5 μm. FIG. 1 and FIG. 15 illustrate the SSRM images of the electrodes according to Example 1 and Example 7, respectively. Meanwhile, FIG. 2 and FIG. 17 illustrate the images observed after masking the conductive material zones of the electrodes according to Example 1 and Example 7, respectively.

### Examples 5 and 6

An electrode was obtained in the same manner as Example 1, except that lithium nickel cobalt manganese aluminum composite oxide having a monomodal distribution and containing discrete particles with a diameter of about 5 μm was used. The top image of FIG. 13 illustrates the SSRM image of Example 5, and the bottom image of FIG. 13 illustrates the image observed after masking the conductive material zone thereof. The top image of FIG. 14 illustrates the SSRM image of Example 6, and the bottom image of FIG. 14 illustrates the image observed after masking the conductive material zone thereof

The following Table 1 shows the content ratio of the ingredients used in Examples 1-6, the type of the conductive material and the specific surface area of the conductive material.

[Table 1]

| | Ex. 1 | Ex. 2 | Ex. 3 | Ex. 4 | Ex. 7 | Ex. 5 | Ex. 6 |
|---|---|---|---|---|---|---|---|
| Active material: Conductive material: Binder (weight ratio) | 96.0:1.5:2.5 | 96.0:1.0:3.0 | 96.0:1.5:2.5 | 96.0:1.0:3.0 | 96.0:1.5:2.5 | 96.0:1.8:2.2 | 96.2:1.6:2.2 |
| Type of conductive material | Carbon black | Carbon black | Carbon black | Carbon black | Carbon black | Carbon black | Carbon black |
| Specific surface area of conductive material $(m^2/g)$ | 1400 | 1400 | 135 | 135 | 135 | 1400 | 1400 |

[Table 2]

| | Ex. 1 | Ex. 2 | Ex. 3 | Ex. 4 | Ex. 7 | Ex. 5 | Ex. 6 |
|---|---|---|---|---|---|---|---|
| MP resistance Active($\Omega \cdot cm$) | 15.3 | 41.4 | 57.6 | 78.4 | 55.4 | 6.55 | 19.83 |
| MP resistance interface ($\Omega \cdot cm^2$) | 0.13 | 0.17 | 0.24 | 0.30 | 0.22 | 0.15 | 0.14 |

## Comparative Examples 1-4

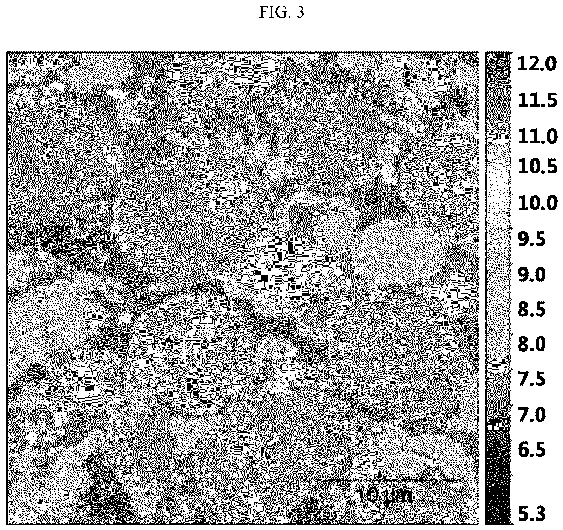

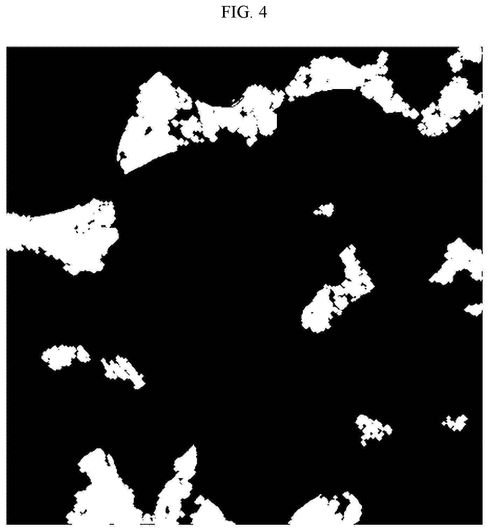

First, lithium nickel cobalt manganese aluminum composite oxide (Li(Ni, Co, Mn, Al)O$_2$), carbon black and polytetrafluoroethylene (PTFE) were introduced to a blender and mixed therein at about 10,000 rpm for about 1 minute to prepare a mixture. Next, the resultant mixture was pulverized through a jet-milling process (feeding pressure 50 psi, grinding pressure 45 psi) to obtain a mixed powder for an electrode. In Comparative Examples 1-4, the kneading step used in Examples was not carried out. The mixed powder for an electrode was introduced to a first lab calender (roll diameter: 88 mm, roll temperature: about 100°C, about 20 rpm) to carry out compression, thereby providing a dry electrode film. After that, the resultant dry electrode film was disposed on both surfaces of aluminum foil (thickness 19 $\mu$m) and laminated through a lamination process while maintaining the temperature at 150°C to obtain an electrode. The electrode active material layer on one surface of the resultant electrode had a thickness of about 80 $\mu$m. FIG. 3 illustrates the SSRM image of Comparative Example 1, and FIG. 4 illustrates the image observed after masking the conductive material zone thereof. Meanwhile, the lithium nickel cobalt manganese aluminum composite oxide has a bimodal distribution and includes discrete particles having a diameter of larger particles (secondary particles) about 10 $\mu$m and a diameter of smaller particles of about 5 $\mu$m.

[Table 3]

| | Comp. Ex. 1 | Comp. Ex. 2 | Comp. Ex. 3 | Comp. Ex. 4 |
|---|---|---|---|---|
| Active material: Conductive material:Binder (weight ratio) | 96.0:1.5:2.5 | 96.0:1.0:3.0 | 96.0:1.5:2.5 | 96.0:1.0:3.0 |
| Type of conductive material | Carbon black | Carbon black | Carbon black | Carbon black |
| Specific surface area of conductive material $(m^2/g)$ | 1400 | 1400 | 135 | 135 |

[Table 4]

| | Comp. Ex. 1 | Comp. Ex. 2 | Comp. Ex. 3 | Comp. Ex. 4 |
|---|---|---|---|---|
| MP resistance Active($\Omega \cdot cm$) | 96.3 | 124.5 | 118.0 | 153.8 |

(continued)

| | Comp. Ex. 1 | Comp. Ex. 2 | Comp. Ex. 3 | Comp. Ex. 4 |
|---|---|---|---|---|
| MP resistance interface ($\Omega \cdot cm^2$) | 0.33 | 0.52 | 0.69 | 0.88 |

**Preparation of Sample of Cross-Section**

The electrode obtained from each of Examples 1-7 and Comparative Examples 1-4 was prepared. A solution containing an epoxy-based polymer having a weight average molecular weight of about 700 g/mol as an epoxy group-containing polymer was prepared. The electrode was impregnated with the epoxy-based polymer solution prepared as described above so that the pores may be filled with the polymer. Then, an ion milling system (IB19520CCP, available from Jeol) for irradiating argon ion beams was used to irradiate focused argon (Ar) ion beams to the positive electrode for a secondary battery to cut off the surface thereof, thereby preparing a sample of cross-section having a clear cross-section. Upon the irradiation of argon ion beams, the ion beam current was set to 170 $\mu$A, the gas flow was set to 1.5 cm$^3$/min, and the irradiation was carried out for 3 hours.

**SSRM Analysis Conditions**

System used for analysis: Cypher ES (Oxford Instrument), Dual-gain ORCA cantilever holder

[Parameters]

Mode: contact
Sample/line: 512x512, Scan rate: 0.5 Hz
Bias: ~2 V, Deflection Setpoint Volts: ~0.2
Scan Angle: 90°

[AFM Mode]

Model: AD-40-As (available from Adama)
Tip: Highly doped (B) single crystal diamond, tip height 300 nm
Cantilever & bulk tip: diamond coated silicon, Reflex coating (Au)
F =180 kHz, k = 40 N/m
Typical contact resistance: ~10 kQ

**SSRM Analysis Method**

After carrying out the ion milling, the sample was transferred to a glove box, while not being exposed to the atmosphere, and loaded to an AFM puck. Then, silver (Ag) paste was applied between the portion of electrode other than the cross-section prepared as mentioned above and the AFM puck to form an additional conduction path. After that, the sample having such an additional conduction path was loaded in a closed cell body and mounted to the AFM system, while being maintained in a state non-exposed to the atmosphere. After carrying out laser aligning, the milled portion was selected as a test portion by using an optical microscope and analyzed under Ar flow. In this manner, the SSRM image was obtained. FIG. 1, FIG. 3, the top image of FIG 13, the top image of FIG. 14 and FIG. 15 illustrate the SSRM images of Example 1, Comparative Example 1, Example 5, Example 6 and Example 7, respectively. The observed images had a size of 30 $\mu$m x 30 $\mu$m.

**Conductive Material Zone Masking**

The SSRM images obtained as described above were subjected to conductive material zone masking by using Gwyddion software.
First, a log(resistance) image was acquired, and the histogram of the log(resistance) distribution in the image was acquired. This was carried out by using Height distribution function in Calculate 1D Statistical function provided by the software. A threshold was defined by carrying out correction of adding 0.2 to the log(R/Q) value corresponding to the minimum value between the peak corresponding to the conductive material and the peak corresponding to the electrode active material. FIG. 12a illustrates the histogram of Example 7, wherein the threshold was set to log(R/S2) = 7.2. Based on this, the conductive material zone was masked. Herein, Grain filtering function was used to delete the zone corresponding to pixels smaller than 3 pixel, and the zone disposed in the electrode active material was deleted. Meanwhile, referring to FIG. 5, FIG. 6 and FIG. 12a, it can be seen that the pixel corresponding to the electrode active material and the pixel corresponding to the conductive material are differentiated from each other on the histogram acquired from the log scale image. In other words, it can be seen that information of each pixel determined in terms of the zone corresponding thereto can be used to quantify the distribution of the conductive material zone with ease.

In addition, FIG. 2, the bottom image of FIG. 13, the bottom image of FIG. 14, FIG. 16 and FIG. 4 illustrate only the masked conductive material zones by using light and shade of color in the electrodes according to Example 1, Example 5, Example 6, Example 7 and Comparative Example 1, respectively.

Then, Grain-Summary function was used to determine the circumference and area of the masked zone.

After that, each value was input to the above Formula 1 and Formula 2 to calculate Index 1 and Index 2. The results are shown in the following Table 5 and Table 6. As shown in Table 5 and Table 6, the dry electrodes obtained by using a kneading process according to Examples show a value of Index 1 of 3.5 $\mu m^{-1}$ or more and a value of Index 2 of 10 or more. However, the dry electrodes obtained according to Comparative Examples show a value of Index 1 of less than 3.5 $\mu m^{-1}$ and a value of Index 2 of less than 10. As such, there is a difference in the dispersibility of the conductive material in the resultant depending on the electrode manufacturing process. It is shown that the electrode according to the present disclosure shows an excellent dispersibility index.

[Table 5]

| | Area of conductive material zone ($\mu m^2$) (Ratio based on total area, %) | Circumference of conductive material zone ($\mu m$) | Index 1 ($\mu m^{-1}$) | Index 2 |
|---|---|---|---|---|
| Ex. 1 | 47.0 (5.2%) | 380.9 | 8.1 | 15.7 |
| Ex. 2 | 75.5 (8.3%) | 381.1 | 5.05 | 12.37 |
| Ex. 3 | 57.4 (6.3%) | 465.0 | 8.10 | 17.31 |
| Ex. 4 | 42.7 (4.7%) | 379.1 | 8.88 | 16.37 |
| Ex. 5 | 48.0 (5.3%) | 312.5 | 6.5 | 12.7 |
| Ex. 6 | 34.2 (3.8%) | 10.1 | 16.7 | 19.83 |
| Ex. 7 | 50.9 (5.6%) | 482.7 | 9.5 | 19.1 |

[Table 6]

| | Area of conductive material zone ($\mu m^2$) (Ratio based on total area, %) | Circumference of conductive material zone ($\mu m$) | Index 1 ($\mu m^{-1}$) | Index 2 |
|---|---|---|---|---|
| Comp. Ex. 1 | 125.6 (13.9%) | 342.6 | 2.73 | 8.62 |
| Comp. Ex. 2 | 42.3 (4.7%) | 179.1 | 4.2 | 7.8 |
| Comp. Ex. 3 | 152.0 (16.8%) | 428.4 | 2.8 | 9.8 |
| Comp. Ex. 4 | 46.0 (5.1%) | 141.7 | 3.08 | 5.89 |

**Claims**

1.  A dry electrode for an electrochemical device,

    which comprises an electrode active material layer derived from a dry electrode film,
    wherein the dry electrode active material layer comprises a mixed powder for an electrode and has a sheet-like shape having a predetermined thickness through the thermocompression binding of the mixed powder for an electrode,
    the mixed powder for an electrode comprises an electrode active material and a binder polymer, and
    at least one optional cross-section inside of the electrode active material layer shows a conductive material dispersibility index 1 (Index 1) of 3.5 $\mu m^{-1}$ or more as determined according to the following Formula 1 and/or a conductive material dispersibility index 2 (Index 2) of 10 or more as determined according to the following Formula 2:

[Formula 1]

$$Index\ 1\ (\mu m^{-1}) = Boundary_{measured}/A$$

[Formula 2]

$$Index\ 2 = Boundary_{measured}/L_{circle}$$

wherein Boundary$_{measured}$ in Formula 1 represents the circumference of a portion determined in a predetermined cross-section of the electrode active material layer and defined as a conductive material zone, A in Formula 1 represents the area of a portion determined in a predetermined cross-section of the electrode active material layer and defined as a conductive material zone, and L$_{circle}$ in Formula 2 represents the circumference ( $2 \times \sqrt{\pi A}$ ) of a circle having the same area as the above-defined conductive material zone.

2. The dry electrode for an electrochemical device according to claim 1, wherein at least one optional cross-section inside of the electrode active material layer shows a conductive material dispersibility index 1 (Index 1) of 3.5 $\mu m^{-1}$ or more as determined according to Formula 1 and a conductive material dispersibility index 2 (Index 2) of 10 or more as determined according to Formula 2.

3. The dry electrode for an electrochemical device according to claim 1 or 2, wherein Index 1 and Index 2 are calculated by the method for evaluating the dispersibility of a conductive material comprising the steps of:

(Step 1) preparing a sample of cross-section in which an optional cross-section inside of the electrode active material layer is exposed;
(Step 2) acquiring a 2D-scale map about the resistance distribution of the sample of cross-section;
(Step 3) masking a conductive material zone; and
(Step 4) calculating the circumference and area of the masked zone, inputting the calculated values to Formula 1 and/or Formula 2, and determining the dispersibility of the conductive material of the electrode active material layer.

4. The dry electrode for an electrochemical device according to claim 1, wherein the electrode active material layer is formed on at least one surface of an electrode current collector, and the cross-section(s) is a surface parallel with or perpendicular to the portion where the electrode active material layer faces the current collector.

5. The dry electrode for an electrochemical device according to claim 1, wherein the binder polymer is fibrilized, and the fibrilization is a result performed by a kneading process based on shear stress.

6. The dry electrode for an electrochemical device according to claim 1, wherein the binder polymer comprises polytetrafluoroethylene (PTFE), polyolefin or a mixture thereof.

7. A method for manufacturing the dry electrode as defined in claim 1, including the steps of:

(S10) mixing electrode materials comprising an electrode active material and a binder polymer;
(S20) kneading the mixed electrode materials;
(S30) grinding the resultant product of step (S20) to obtain a mixed powder for an electrode; and
(S40) carrying out compression molding of the mixed powder for an electrode to obtain a free standing-type dry electrode film,
wherein step (S20) is carried out at a temperature of 60°C or higher.

8. The method for manufacturing a dry electrode according to claim 7, wherein step (S20) is carried out at a temperature ranging from 60°C to 250°C.

9. The method for manufacturing a dry electrode according to claim 7, which further comprises a step of binding the dry electrode film with a current collector through a lamination process.

10. An electrochemical device comprising: a positive electrode; a negative electrode; and a separator or a solid electrolyte membrane interposed between the positive electrode and the negative electrode, wherein at least one of the positive electrode and the negative electrode is the dry electrode as defined in any one of claims 1 to 6.

FIG. 1

FIG. 2

FIG. 3

FIG. 4

FIG. 5

FIG. 6

FIG. 7

<u>10</u>

FIG. 8

FIG. 9

<u>100</u>

FIG. 10

<u>200</u>

FIG. 11a

<u>10</u>

FIG. 11b

<u>10</u>

FIG. 12a

FIG. 12b

FIG. 13

FIG. 14

FIG. 15

FIG. 16

FIG. 17

FIG. 18

FIG. 19

| Grain Summary | ✕ |
|---|---|
| Number of grains: | 228 |
| Density: | $0.2523\ \mu m^{-2}$ |
| Total projected area (abs.): | $50.92\ \mu m^2$ |
| Total projected area (rel.): | 5.636 % |
| Mean grain area: | $0.2234\ \mu m^2$ |
| Mean grain size: | 322.8 nm |
| Total grain volume (zero): | $342.1\ \mu m^2$ |
| Total grain volume (minimum): | $27.58\ \mu m^2$ |
| Total grain volume (Laplace): | $-47.60\ \mu m^2$ |
| Total projected boundary length: | 482.7 µm |

TAB⌄

Help          OK

## INTERNATIONAL SEARCH REPORT

| International application No. |
|---|
| **PCT/KR2023/005416** |

| A. | CLASSIFICATION OF SUBJECT MATTER |
|---|---|

**H01M 4/04**(2006.01)i; **H01M 4/13**(2010.01)i; **C08L 27/18**(2006.01)i; **C08L 23/00**(2006.01)i; **G01Q 30/04**(2010.01)i; **G01Q 30/20**(2010.01)i; **G01Q 60/36**(2010.01)i

According to International Patent Classification (IPC) or to both national classification and IPC

| B. | FIELDS SEARCHED |
|---|---|

Minimum documentation searched (classification system followed by classification symbols)

H01M 4/04(2006.01); B05D 3/12(2006.01); B05D 5/12(2006.01); C01B 32/174(2017.01); G01N 15/00(2006.01); G01N 15/02(2006.01); H01M 4/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도전재(conductive), 분산(dispersion), 활물질(active material), 바인더(binder), 둘레(circumference), 면적(area), 마스킹(masking), 섬유화(fibrilling), 니딩(kneading), 그라인딩(grinding), 프리스탠딩(free standing), 필름(film)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-1211968 B1 (MAXWELL TECHNOLOGIES, INC.) 13 December 2012 (2012-12-13) See claims 1, 5, 11 and 15; paragraphs [0077]-[0084], [0100], [0113] and [0126]-[0129]; and figure 3. | 1-2,4-6 |
| Y | | 3,7-9 |
| Y | KR 10-2022-0046201 A (HYUNDAI MOTOR COMPANY et al.) 14 April 2022 (2022-04-14) See claim 1; and paragraphs [0072] and [0080]. | 3 |
| Y | JP 2007-026984 A (DAIDO METAL CO., LTD.) 01 February 2007 (2007-02-01) See claim 1; and paragraph [0019]. | 7-9 |
| A | JP 2010-122122 A (TOYOTA MOTOR CORP.) 03 June 2010 (2010-06-03) See entire document. | 1-9 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/005416** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0100863 A (LG CHEM, LTD.) 29 August 2019 (2019-08-29)<br>See entire document. | 1-9 |

Form PCT/ISA/210 (second sheet) (July 2022)

**INTERNATIONAL SEARCH REPORT**

International application No.

**PCT/KR2023/005416**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☑ Claims Nos.: **10**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/KR2023/005416**

| Patent document cited in search report | | | Publication date (day/month/year) | Patent family member(s) | | | Publication date (day/month/year) |
|---|---|---|---|---|---|---|---|
| KR | 10-1211968 | B1 | 13 December 2012 | CA | 2465086 | A1 | 22 October 2004 |
| | | | | CN | 101194384 | A | 04 June 2008 |
| | | | | CN | 102569719 | A | 11 July 2012 |
| | | | | CN | 102569719 | B | 05 April 2017 |
| | | | | CN | 1838999 | A | 27 September 2006 |
| | | | | CN | 1838999 | B | 18 April 2012 |
| | | | | EP | 1644136 | A2 | 12 April 2006 |
| | | | | EP | 1644136 | A4 | 14 January 2009 |
| | | | | EP | 1644136 | B1 | 29 August 2018 |
| | | | | EP | 1644136 | B8 | 03 April 2019 |
| | | | | EP | 1766706 | A1 | 28 March 2007 |
| | | | | EP | 1766706 | B1 | 14 November 2018 |
| | | | | EP | 1882277 | A1 | 30 January 2008 |
| | | | | EP | 1882277 | A4 | 05 August 2009 |
| | | | | EP | 2357043 | A2 | 17 August 2011 |
| | | | | EP | 2357043 | A3 | 05 October 2011 |
| | | | | EP | 2357044 | A2 | 17 August 2011 |
| | | | | EP | 2357044 | A3 | 05 October 2011 |
| | | | | EP | 2357045 | A2 | 17 August 2011 |
| | | | | EP | 2357045 | A3 | 05 October 2011 |
| | | | | EP | 2357046 | A2 | 17 August 2011 |
| | | | | EP | 2357046 | A3 | 05 October 2011 |
| | | | | EP | 2357046 | B1 | 04 December 2013 |
| | | | | EP | 3467918 | A1 | 10 April 2019 |
| | | | | EP | 3498385 | A1 | 19 June 2019 |
| | | | | EP | 3498385 | B1 | 07 April 2021 |
| | | | | EP | 3863079 | A1 | 11 August 2021 |
| | | | | ES | 2699850 | T3 | 13 February 2019 |
| | | | | ES | 2705475 | T3 | 25 March 2019 |
| | | | | ES | 2879335 | T3 | 22 November 2021 |
| | | | | HU | E041349 | T2 | 28 May 2019 |
| | | | | HU | E054796 | T2 | 28 September 2021 |
| | | | | JP | 2007-531245 | A | 01 November 2007 |
| | | | | JP | 2008-541339 | A | 20 November 2008 |
| | | | | JP | 2011-109115 | A | 02 June 2011 |
| | | | | JP | 4772673 | B2 | 14 September 2011 |
| | | | | KR | 10-2008-0005584 | A | 14 January 2008 |
| | | | | US | 10547057 | B2 | 28 January 2020 |
| | | | | US | 11430613 | B2 | 30 August 2022 |
| | | | | US | 2005-0057888 | A1 | 17 March 2005 |
| | | | | US | 2005-0186473 | A1 | 25 August 2005 |
| | | | | US | 2005-0250011 | A1 | 10 November 2005 |
| | | | | US | 2005-0266298 | A1 | 01 December 2005 |
| | | | | US | 2005-0271798 | A1 | 08 December 2005 |
| | | | | US | 2006-0109608 | A1 | 25 May 2006 |
| | | | | US | 2006-0114643 | A1 | 01 June 2006 |
| | | | | US | 2006-0133012 | A1 | 22 June 2006 |
| | | | | US | 2006-0133013 | A1 | 22 June 2006 |
| | | | | US | 2006-0137158 | A1 | 29 June 2006 |
| | | | | US | 2006-0143884 | A1 | 06 July 2006 |

Form PCT/ISA/210 (patent family annex) (July 2022)

INTERNATIONAL SEARCH REPORT
Information on patent family members

International application No.

**PCT/KR2023/005416**

| Patent document cited in search report | Publication date (day/month/year) | Patent family member(s) | | | Publication date (day/month/year) |
|---|---|---|---|---|---|
| | | US | 2006-0146475 | A1 | 06 July 2006 |
| | | US | 2006-0146479 | A1 | 06 July 2006 |
| | | US | 2006-0147712 | A1 | 06 July 2006 |
| | | US | 2006-0148112 | A1 | 06 July 2006 |
| | | US | 2006-0148191 | A1 | 06 July 2006 |
| | | US | 2006-0246343 | A1 | 02 November 2006 |
| | | US | 2007-0026317 | A1 | 01 February 2007 |
| | | US | 2007-0122698 | A1 | 31 May 2007 |
| | | US | 2007-0190424 | A1 | 16 August 2007 |
| | | US | 2008-0016664 | A1 | 24 January 2008 |
| | | US | 2008-0092808 | A1 | 24 April 2008 |
| | | US | 2008-0102371 | A1 | 01 May 2008 |
| | | US | 2008-0117564 | A1 | 22 May 2008 |
| | | US | 2008-0117565 | A1 | 22 May 2008 |
| | | US | 2008-0206446 | A1 | 28 August 2008 |
| | | US | 2008-0236742 | A1 | 02 October 2008 |
| | | US | 2008-0266753 | A1 | 30 October 2008 |
| | | US | 2009-0223630 | A1 | 10 September 2009 |
| | | US | 2009-0239127 | A1 | 24 September 2009 |
| | | US | 2009-0290288 | A1 | 26 November 2009 |
| | | US | 2010-0014215 | A1 | 21 January 2010 |
| | | US | 2010-0033901 | A1 | 11 February 2010 |
| | | US | 2010-0119699 | A1 | 13 May 2010 |
| | | US | 2010-0263910 | A1 | 21 October 2010 |
| | | US | 2011-0114896 | A1 | 19 May 2011 |
| | | US | 2011-0165318 | A9 | 07 July 2011 |
| | | US | 2011-0299219 | A1 | 08 December 2011 |
| | | US | 2012-0040243 | A1 | 16 February 2012 |
| | | US | 2013-0157141 | A1 | 20 June 2013 |
| | | US | 2015-0072234 | A1 | 12 March 2015 |
| | | US | 2017-0098826 | A1 | 06 April 2017 |
| | | US | 2020-0152987 | A1 | 14 May 2020 |
| | | US | 7090946 | B2 | 15 August 2006 |
| | | US | 7102877 | B2 | 05 September 2006 |
| | | US | 7227737 | B2 | 05 June 2007 |
| | | US | 7295423 | B1 | 13 November 2007 |
| | | US | 7342770 | B2 | 11 March 2008 |
| | | US | 7352558 | B2 | 01 April 2008 |
| | | US | 7384433 | B2 | 10 June 2008 |
| | | US | 7492571 | B2 | 17 February 2009 |
| | | US | 7495349 | B2 | 24 February 2009 |
| | | US | 7508651 | B2 | 24 March 2009 |
| | | US | 7722686 | B2 | 25 May 2010 |
| | | US | 7791860 | B2 | 07 September 2010 |
| | | US | 7791861 | B2 | 07 September 2010 |
| | | US | 7851238 | B2 | 14 December 2010 |
| | | US | 7883553 | B2 | 08 February 2011 |
| | | US | 7920371 | B2 | 05 April 2011 |
| | | US | 7935155 | B2 | 03 May 2011 |
| | | US | 8072734 | B2 | 06 December 2011 |

Form PCT/ISA/210 (patent family annex) (July 2022)

**EP 4 492 481 A1**

<table>
<tr><th colspan="2">INTERNATIONAL SEARCH REPORT<br>Information on patent family members</th><th colspan="2">International application No.<br>**PCT/KR2023/005416**</th></tr>
<tr><th>Patent document<br>cited in search report</th><th>Publication date<br>(day/month/year)</th><th>Patent family member(s)</th><th>Publication date<br>(day/month/year)</th></tr>
<tr><td></td><td></td><td>US 8213156 B2</td><td>03 July 2012</td></tr>
<tr><td></td><td></td><td>US 8815443 B2</td><td>26 August 2014</td></tr>
<tr><td></td><td></td><td>US 9525168 B2</td><td>20 December 2016</td></tr>
<tr><td></td><td></td><td>WO 2005-008807 A2</td><td>27 January 2005</td></tr>
<tr><td></td><td></td><td>WO 2005-008807 A3</td><td>09 June 2005</td></tr>
<tr><td></td><td></td><td>WO 2006-001847 A1</td><td>05 January 2006</td></tr>
<tr><td></td><td></td><td>WO 2006-135495 A1</td><td>21 December 2006</td></tr>
<tr><td>KR 10-2022-0046201 A</td><td>14 April 2022</td><td>None</td><td></td></tr>
<tr><td>JP 2007-026984 A</td><td>01 February 2007</td><td>JP 4931383 B2</td><td>16 May 2012</td></tr>
<tr><td></td><td></td><td>US 2007-0020514 A1</td><td>25 January 2007</td></tr>
<tr><td>JP 2010-122122 A</td><td>03 June 2010</td><td>None</td><td></td></tr>
<tr><td>KR 10-2019-0100863 A</td><td>29 August 2019</td><td>KR 10-2197898 B1</td><td>04 January 2021</td></tr>
<tr><td></td><td></td><td>WO 2019-164235 A1</td><td>29 August 2019</td></tr>
</table>

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049196

- US 20050266298 A1

**Non-patent literature cited in the description**

- *Polymer*, 2005, vol. 46, 8872-8882